(19) Europäisches Patentamt
European Patent Office
Office européen des brevets

(11) EP 4 382 568 A1

# (12) EUROPEAN PATENT APPLICATION

published in accordance with Art. 153(4) EPC

(43) Date of publication:
**12.06.2024 Bulletin 2024/24**

(21) Application number: **22852227.2**

(22) Date of filing: **03.08.2022**

(51) International Patent Classification (IPC):
***C08L 23/12*** (2006.01) ***C08F 255/02*** (2006.01)
***C08F 255/04*** (2006.01) ***C08F 222/06*** (2006.01)
***H01B 3/30*** (2006.01)

(52) Cooperative Patent Classification (CPC):
**C08F 222/06; C08F 255/02; C08F 255/04; C08L 23/12; H01B 3/30**

(86) International application number:
**PCT/CN2022/109917**

(87) International publication number:
**WO 2023/011515 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.08.2021 CN 202110892173**
**04.08.2021 CN 202110893165**
**25.07.2022 CN 202210876405**

(71) Applicants:
- **China Petroleum & Chemical Corporation Beijing 100728 (CN)**
- **Beijing Research Institute of Chemical Industry, China Petroleum & Chemical Corporation Chaoyang District Beijing 100013 (CN)**
- **Tsinghua University Haidian District Beijing 100084 (CN)**

(72) Inventors:
- **SHAO, Qing Beijing 100013 (CN)**
- **HE, Jinliang Beijing 100084 (CN)**
- **YUAN, Hao Beijing 100084 (CN)**
- **LI, Qi Beijing 100084 (CN)**
- **ZHANG, Yaru Beijing 100013 (CN)**
- **HU, Jun Beijing 100084 (CN)**
- **WANG, Mingti Beijing 100013 (CN)**
- **HUANG, Shangshi Beijing 100084 (CN)**
- **LI, Juan Beijing 100013 (CN)**
- **HU, Shixun Beijing 100084 (CN)**
- **ZHANG, Qi Beijing 100013 (CN)**
- **GAO, Dali Beijing 100013 (CN)**
- **SHI, Hongwei Beijing 100013 (CN)**

(74) Representative: **Hoffmann Eitle Patent- und Rechtsanwälte PartmbB Arabellastraße 30 81925 München (DE)**

## (54) FLEXIBLE POLYPROPYLENE MODIFIED INSULATION MATERIAL, PREPARATION METHOD THEREFOR, AND APPLICATION THEREOF

(57) The invention belongs to the field of insulating materials, in particular cable insulating materials, and particularly relates to a modified flexible polypropylene insulating material, and preparation method and use thereof. The modified flexible polypropylene insulating material comprises a propylene-based continuous phase, and a rubber phase and a grafted phase derived from an unsaturated bond-containing polymerizable monomer dispersed in the propylene-based continuous phase; wherein, the modified flexible polypropylene insulating material has a content of xylene solubles of 10-55 wt%, preferably 15-45 wt%, more preferably 18-40

wt%, and still more preferably 20-40 wt%, based on the total weight of the modified flexible polypropylene insulating material; the content of structural units derived from the unsaturated bond-containing polymerizable monomer and in a grafted state in the modified flexible polypropylene insulating material is 0.3-6 wt%, and preferably 0.7-5 wt%; the flexural modulus of the modified flexible polypropylene insulating material is 200-1000 MPa, preferably 200-950 MPa, more preferably 200-700 MPa, and still more preferably 250-600 MPa; preferably, the ratio of the mass of the structural units derived from the unsaturated bond-containing polymerizable monomer in xylene insolubles to the mass of the structural units derived from the unsaturated bond-containing polymerizable monomer in the modified flexible polypropylene insulating material is more than 0.1, preferably 0.3-0.9. The modified flexible polypropylene insulating material of the invention can give consideration to both mechanical property and electrical property at a higher working temperature, and is suitable for working conditions of high temperature and high operating field strength.

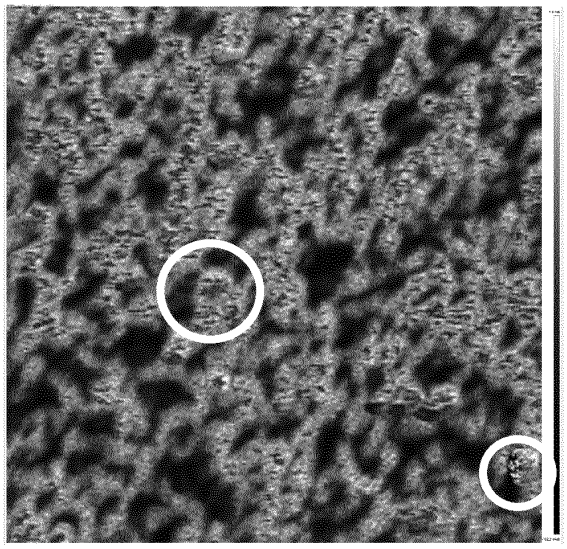

FIG. 1

## Description

### Technical Field

The invention belongs to the field of insulating materials, in particular cable insulating materials, and particularly relates to a modified flexible polypropylene insulating material, a method for preparing the modified flexible polypropylene insulating material and use of the modified flexible polypropylene insulating material.

### Background art

Polypropylene-based material has the advantages of natural high operating temperature and high breakdown field strength, has space charge inhibition characteristic and recyclable property, and is an optimal substitute for the existing cable insulating material - crosslinked polyethylene. However, as an insulating material, polypropylene is brittle and has insufficient toughness, and cannot meet the requirements of construction and layout of cables. Blending of polyolefin elastomer in polypropylene, or incorporation of low-modulus ethylene propylene copolymer into rubber phase is currently one of the main toughening means (see, e.g., EP893802A1, EP893801A1, KR1020180093807A, KR1020120095309A, etc.). However, this method inevitably leads to a decrease in the insulating property of the material, particularly the insulating property at high temperatures. Therefore, the insulating property of the material needs to be improved by means of additive, nano doping or graft modification and the like, to meet the working conditions of high temperature and high field strength of cables.

Graft modification is to introduce special functional groups on a polypropylene molecular chain, change molecular orbitals and introduce charge traps so as to improve the insulating property of the material. Compared with nano-particle doping modification, the method is featured with a simpler process, which solves the problem of unstable performance caused by nano-particle agglomeration, and has very high application potential.

CN105949394A discloses maleic anhydride grafted polypropylene material and preparation method thereof, the material having an obvious reduction in space charge accumulation after grafting. However, the melt grafting method adopted in the invention may seriously reduce the molecular weight of the material, so that the mechanical properties of the material cannot meet the actual requirements of cable insulating material.

US20140363671A1 discloses a cable using epoxy-containing group grafted polypropylene as an insulating material, but this patent discloses only a preparation method, and does not disclose structural parameters such as grafting ratio and the like of the material, nor the insulating property of the material.

CN111354507A mentions use of maleic anhydride grafted polypropylene as water tree inhibitor in cable insulating layer, however, the preparation and grafting ratio of the grafted polypropylene are not limited in detail, and the insulating property of the material is not disclosed either.

### Contents of the invention

The invention aims to overcome the above defects of the prior art, and provide a modified flexible polypropylene insulating material which can give consideration to both mechanical property and electrical property at a higher working temperature, and is suitable for working conditions of high temperature and high operating field strength.

A first aspect of the invention is to provide a modified flexible polypropylene insulating material comprising a propylene-based continuous phase, and a rubber phase and a grafted phase derived from an unsaturated bond-containing polymerizable monomer dispersed in the propylene-based continuous phase; wherein, the modified flexible polypropylene insulating material has a content of xylene solubles of 10-55 wt%, preferably 15-45 wt%, more preferably 18-40 wt%, and still more preferably 20-40 wt%, based on the total weight of the modified flexible polypropylene insulating material; the content of structural units derived from the unsaturated bond-containing polymerizable monomer and in a grafted state in the modified flexible polypropylene insulating material is 0.3-6 wt%, and preferably 0.7-5 wt%; the flexural modulus of the modified flexible polypropylene insulating material is 200-1000 MPa, preferably 200-950 MPa, more preferably 200-700 MPa, and still more preferably 250-600 MPa; preferably, the ratio of the mass of the structural units derived from the unsaturated bond-containing polymerizable monomer in xylene insolubles to the mass of the structural units derived from the unsaturated bond-containing polymerizable monomer in the modified flexible polypropylene insulating material is more than 0.1, preferably 0.3-0.9.

A second aspect of the invention is to provide a method for preparing the above modified flexible polypropylene insulating material, comprising the following steps: blending modified polypropylene (A) and low-modulus polypropylene (B) to prepare the modified flexible polypropylene insulating material, wherein the modified polypropylene (A) is polypropylene graft-modified with a first unsaturated bond-containing polymerizable monomer, and the low-modulus polypropylene (B) is unmodified low-modulus polypropylene and/or low-modulus polypropylene graft-modified with a second unsaturated bond-containing polymerizable monomer; preferably, the first unsaturated bond-containing polymerizable

monomer and the second unsaturated bond-containing polymerizable monomer are each independently an alkenyl-containing functional monomer and optionally an anhydride monomer.

A third aspect of the invention is to provide use of the above modified flexible polypropylene insulating material.

The modified flexible polypropylene insulating material of the invention can give consideration to both mechanical property and electrical property at a higher working temperature, and is suitable for working conditions of high temperature and high operating field strength. Compared with the polypropylene material obtained by alloying in a kettle, the polypropylene material mechanically blended with the low-modulus polypropylene results in products that have more diversity and regulation flexibility in structure, so that better performance can be obtained. Compared with the nano doping technology, the polymer graft-modified with an alkenyl-containing functional monomer introduced by dispersion can form a uniformly distributed nano dispersed phase, namely, an organic nanoparticle, in the composite material, so that the problems that inorganic nanoparticles are difficult to add and disperse and the like are solved. In addition, compared with the material in which small molecule additives are added, the graft-modified polypropylene material of the invention avoids performance reduction caused by small molecule migration, and therefore has better stability.

Additional features and advantages of the invention will be set forth in the detailed description of specific embodiments which follows.

## Brief description of the figures

Exemplary embodiments of the invention will be described in more detail by referring to the figures.

FIG. 1 is an atomic force microscope photograph of the product of Example 1A in which the bright white portions indicated in the circles are the styrene grafted phase, the black portions are the rubber phase, and other portions are the continuous phase.

FIG. 2 is a photograph showing the microstructure of the product of Example 1A under an electron microscope at 10000 times, in which the spherical dispersed phase is the styrene grafted phase.

FIG. 3 is a photograph showing the microstructure of the product of Example 3A under an electron microscope at 10000 times.

FIG. 4 is a photograph showing the microstructure of the product of Example 4A under an electron microscope at 10000 times.

FIG. 5 is a photograph showing the microstructure of the product of Example 5A under an electron microscope at 10000 times.

FIG. 6 is a photograph showing the microstructure of the product of Comparative Example 3 under an electron microscope at 10000 times.

FIG. 7 is a photograph showing the microstructure of the product of Comparative Example 3 after etching under an electron microscope at 10000 times, wherein the black portions are the rubber phase.

FIG. 8 is a photograph showing the microstructure of the product of Comparative Example 4A under an electron microscope at 10000 times.

FIG. 9 is a photograph showing the microstructure of the product of Comparative Example 5A under an electron microscope at 10000 times.

FIG. 10 is an atomic force microscope photograph of the product of Example 1B in which the bright white portions indicated in the circles are the styrene-maleic anhydride grafted phase, the black portions are the rubber phase, and other portions are the continuous phase.

FIG. 11 is a photograph showing the microstructure of the product of Example 1B under an electron microscope at 20000 times, in which the spherical dispersed phase is the styrene-maleic anhydride grafted phase.

FIG. 12 is a photograph showing the microstructure of the product of Example 2B under an electron microscope at 20000 times.

FIG. 13 is a photograph showing the microstructure of the product of Example 3B under an electron microscope at 20000 times.

FIG. 14 is a photograph showing the microstructure of the product of Comparative Example 4B under an electron microscope at 20000 times.

FIG. 15 is a photograph showing the microstructure of the product of Comparative Example 5B under an electron microscope at 20000 times.

## Detailed description of the invention

The following is a detailed description of specific embodiments of the invention. It should be understood that the specific embodiments described herein are only to illustrate and explain, not to limit, the invention.

The invention provides a modified flexible polypropylene insulating material comprising a propylene-based

continuous phase, and a rubber phase and a grafted phase derived from an unsaturated bond-containing polymerizable monomer dispersed in the propylene-based continuous phase; wherein, the modified flexible polypropylene insulating material has a content of xylene solubles of 10-55 wt%, preferably 15-45 wt%, more preferably 18-40 wt%, and still more preferably 20-40 wt%, based on the total weight of the modified flexible polypropylene insulating material; the content of structural units derived from the unsaturated bond-containing polymerizable monomer and in a grafted state in the modified flexible polypropylene insulating material is 0.3-6 wt%, preferably 0.7-5 wt%, and more preferably 0.4-4.5 wt%; the flexural modulus of the modified flexible polypropylene insulating material is 200-1000 MPa, preferably 200-950 MPa, more preferably 200-900 MPa, still more preferably 200-800 MPa, still more preferably 200-700 MPa, and still more preferably 250-600 MPa; preferably, the ratio of the mass of the structural units derived from the unsaturated bond-containing polymerizable monomer in xylene insolubles to the mass of the structural units derived from the unsaturated bond-containing polymerizable monomer in the modified flexible polypropylene insulating material is more than 0.1, preferably 0.3-0.9.

In one embodiment, the unsaturated bond-containing polymerizable monomer is an alkenyl-containing functional monomer; the content of structural units derived from the alkenyl-containing functional monomer and in a grafted state in the modified flexible polypropylene insulating material is 0.4-6 wt%, and preferably 1-5 wt%; the D50 of the grafted phase is less than 300 nm, preferably 10-250 nm, and more preferably 50-200 nm.

In another embodiment, the unsaturated bond-containing polymerizable monomer is an anhydride monomer and an alkenyl-containing functional monomer; the content of structural units derived from the anhydride monomer and the alkenyl-containing functional monomer and in a grafted state in the modified flexible polypropylene insulating material is 0.3-5 wt%, preferably 0.7-3 wt%, and the content of structural units derived from the anhydride monomer and in a grafted state is 0.05-2 wt%, preferably 0.2-0.5 wt%; the D50 of the grafted phase is less than 170 nm, preferably 10-150 nm, and more preferably 55-110 nm.

In the invention, the modified flexible polypropylene insulating material has a separated phase structure. Where the meaning of "continuous phase" is well known to those skilled in the art and refers to the matrix portion, the "rubber phase" refers to the soft xylene soluble portion, the "grafted phase" is formed from structural units derived from an unsaturated bond-containing polymerizable monomer, wherein the structural units derived from the unsaturated bond-containing polymerizable monomer may be wholly or predominantly derived from a grafted homo- or co-polypropylene, or may be partially derived from a grafted low-modulus polypropylene, and thus the structural units derived from the unsaturated bond-containing polymerizable monomer and "in a grafted state" refers to the structural units derived from the unsaturated bond-containing polymerizable monomer which form a covalent bond (graft) with the polypropylene and optionally the low-modulus polypropylene. The multiphase structure can be observed by an atomic force microscope, wherein the black portions observed by the atomic force microscope are the rubber phase, the bright white portions are the grafted phase, and other portions are the continuous phase. The grafted phase can also be directly observed by an electron microscope (the dispersed phase in the electron microscope image).

According to the invention, preferably, the modified flexible polypropylene insulating material has at least one of the following characteristics: the melt flow rate under the load of 2.16 kg at 230°C is 0.5-15 g/10 min, preferably 0.6-10 g/10 min, and further preferably 0.8-6 g/10 min; the elongation at break is ≥ 200%, and preferably ≥ 300%; the tensile strength is more than 5 MPa, preferably 10-25 MPa.

In one embodiment, when the unsaturated bond-containing polymerizable monomer is an alkenyl-containing functional monomer, the modified flexible polypropylene insulating material has at least one of the following characteristics: the melt flow rate under the load of 2.16 kg at 230°C is 0.5-15 g/10 min, preferably 0.6-10 g/10 min, and further preferably 0.8-6 g/10 min; the elongation at break is ≥ 200%, and preferably ≥ 300%; the tensile strength is more than 5 MPa, preferably 10-25 MPa.

In another embodiment, when the unsaturated bond-containing polymerizable monomer is an anhydride monomer and an alkenyl-containing functional monomer, the modified flexible polypropylene insulating material has at least one of the following characteristics: the melt flow rate under the load of 2.16 kg at 230°C is 0.5-15 g/10 min, preferably 1-10 g/10 min, and further preferably 1.2-6 g/10 min; the elongation at break is ≥ 200%, and preferably ≥ 300%; the tensile strength is more than 5 MPa, preferably 10-25 MPa.

According to the invention, preferably, the modified flexible polypropylene insulating material has at least one of the following characteristics:

- the maximum working temperature of the modified flexible polypropylene insulating material is ≥ 90°C, preferably 100-160°C, and more preferably 110-140°C;
- the breakdown field strength $E_g$ at 110°C of the modified flexible polypropylene insulating material is ≥ 285 kV/mm, preferably 290-800 kV/mm, and more preferably 300-750 kV/mm;
- the direct current volume resistivity $\rho_{vg}$ at 110°C and 40 kV/mm field strength of the modified flexible polypropylene insulating material is ≥ $1.0\times10^{13}$ Q.m, preferably $1.5\times10^{13}$ Q.m -$1.0 \times10^{20}\Omega$.m;
- the dielectric constant at 110°C and 50 Hz of the modified flexible polypropylene insulating material is greater than

2.0, and preferably 2.1-2.5.

In one embodiment, when the unsaturated bond-containing polymerizable monomer is an alkenyl-containing functional monomer, the modified flexible polypropylene insulating material has at least one of the following characteristics:

- the maximum working temperature of the modified flexible polypropylene insulating material is ≥ 90°C, preferably 100-160°C, and more preferably 110-140°C;
- the breakdown field strength $E_g$ at 110°C of the modified flexible polypropylene insulating material is ≥ 290 kV/mm, preferably 300-800 kV/mm, and more preferably 310-750 kV/mm; for example 320 kV/mm, 330 kV/mm, 340 kV/mm, 350 kV/mm, 400 kV/mm, 450 kV/mm, 500 kV/mm, 550 kV/mm, 600 kV/mm, 650 kV/mm, 700 kV/mm;
- the direct current volume resistivity $\rho_{vg}$ at 110°C and 40 kV/mm field strength of the modified flexible polypropylene insulating material is ≥ $1.0 \times 10^{13}$ Q.m, preferably $1.5\times10^{13}$ Q.m -$1.0 \times10^{20}$ Ω.m;
- the dielectric constant at 110°C and 50 Hz of the modified flexible polypropylene insulating material is greater than 2.0, and preferably 2.1-2.5.

In another embodiment, when the unsaturated bond-containing polymerizable monomer is an anhydride monomer and an alkenyl-containing functional monomer, the modified flexible polypropylene insulating material has at least one of the following characteristics:

- the maximum working temperature of the modified flexible polypropylene insulating material is ≥ 90°C, preferably 100-160°C, and more preferably 110-140°C;
- the breakdown field strength $E_g$ at 110 °C of the modified flexible polypropylene insulating material is ≥ 285 kV/mm, preferably 290-800 kV/mm, and more preferably 310-750 kV/mm; for example 320 kV/mm, 330 kV/mm, 340 kV/mm, 350 kV/mm, 400 kV/mm, 450 kV/mm, 500 kV/mm, 550 kV/mm, 600 kV/mm, 650 kV/mm, 700 kV/mm;
- the direct current volume resistivity $\rho_{vg}$ at 110°C and 40 kV/mm field strength of the modified flexible polypropylene insulating material is ≥ $2.0\times10^{13}$ Q.m, preferably $4.0\times10^{13}$ Q.m -$1.0 \times10^{20}$ Q.m;
- the dielectric constant at 110°C and 50 Hz of the modified flexible polypropylene insulating material is greater than 2.0, and preferably 2.1-2.5.

The maximum working temperature is defined as the working temperature at which the material can be used stably for a long period of time, as is well known in the art. The above excellent insulating properties obtained by the material of the invention tested at 110°C can prove that the material of the invention has the maximum working temperature of at least 110°C.

Grafting modification of polypropylene by alkenyl-containing functional monomer can significantly improve the breakdown strength of the material with simple raw materials; on this basis, the addition of an anhydride monomer for copolymerization can achieve a more significant resistivity improvement effect at a smaller total monomer addition. In addition, the grafting with an anhydride monomer can also effectively improve the water tree resistance of the insulating material.

According to the invention, the anhydride monomer may be selected from anhydrides having at least one alkenyl group; preferably, the anhydride monomer is selected from maleic anhydride and/or itaconic anhydride; further preferably, the anhydride monomer is maleic anhydride.

The alkenyl groups in the alkenyl-containing functional monomer of the invention are used for grafting with polypropylene/low-modulus polypropylene, and therefore, alkenyl-containing functional monomers having reactable alkenyl groups are all suitable for use in the invention.

Specifically, the alkenyl-containing functional monomer is selected from at least one of monomers having a structure represented by the formula 1,

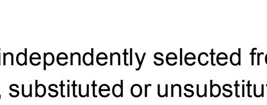 formula 1

in the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl.

According to a preferred embodiment of the invention, $R_b$, $R_c$, $R_d$ are each independently selected from H,

substituted or unsubstituted $C_1$-$C_6$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano, substituted or unsubstituted $C_3$-$C_{20}$ silyl; the substituent group is halogen, hydroxy, amino, $C_1$-$C_{12}$ alkyl, $C_3$-$C_6$ cycloalkyl, $C_1$-$C_{12}$ alkoxy, $C_1$-$C_{12}$ acyloxy.

According to a more preferred embodiment of the invention, wherein, $R_b$, $R_c$, $R_d$ are each independently selected from H, substituted or unsubstituted $C_1$-$C_6$ alkyl;

$R_a$ is selected from a group represented by formula 2, a group represented by formula 3, a group represented by formula 4, a group represented by formula 5, a group represented by formula 6, a combination of a group represented by formula 6 and a group represented by formula 7, a heterocyclic group;

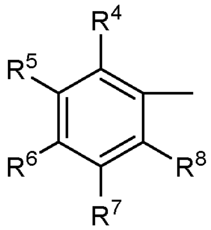

formula 2

in the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amino, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amino; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

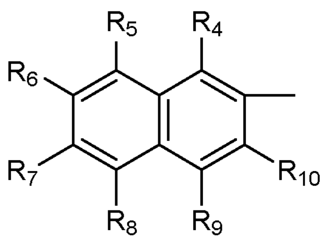

formula 3

in the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amino, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amino; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

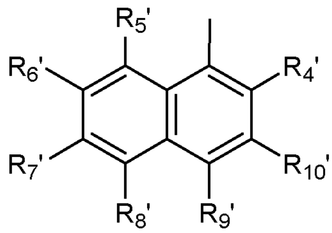

formula 4

in the formula 4, $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amino, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amino; preferably, $R_4$'-$R_{10}$' are each independently selected from

H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

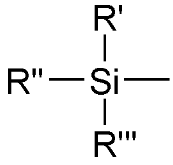
formula 5

in the formula 5, R', R", R‴ are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;

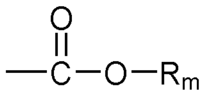
formula 6
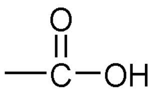
formula 7

in the formula 6, $R_m$ is selected from the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is selected from at least one of halogen, amino and hydroxy;

the heterocyclic group is selected from imidazolyl, pyrazolyl, carbazolyl, pyrrolidinonyl, pyridyl, piperidinyl, caprolactanyl, pyrazinyl, thiazolyl, purinyl, morpholinyl, oxazolinyl.

In one embodiment, when the unsaturated bond-containing polymerizable monomer is an alkenyl-containing functional monomer, preferably, $R_a$ is selected from a group represented by the formula 2, a group represented by the formula 3, a group represented by the formula 4, a group represented by the formula 5, a group represented by the formula 6, a combination of a group represented by the formula 6 and a group represented by the formula 7, a heterocyclic group.

In another embodiment, when the unsaturated bond-containing polymerizable monomer is an anhydride monomer and an alkenyl-containing functional monomer, preferably, $R_a$ is selected from a group represented by the formula 2, a group represented by the formula 3, a group represented by the formula 4, a group represented by the formula 6, a combination of a group represented by the formula 6 and a group represented by the formula 7, a heterocyclic group.

According to a specific embodiment of the invention, the alkenyl-containing functional monomer is an aromatic olefin monomer, the aromatic olefin monomer is selected from at least one of styrene, α-methylstyrene, 1-vinyl naphthalene, 2-vinyl naphthalene, mono- or polysubstituted styrene, mono- or polysubstituted α-methylstyrene, mono- or polysubstituted 1-vinyl naphthalene and mono- or polysubstituted 2-vinyl naphthalene; the substituent group preferably is selected from at least one of halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, Ci-Cs linear amine group and $C_3$-$C_8$ branched amine group or cyclic amine group; preferably, the aromatic olefin monomer is selected from at least one of styrene, α-methylstyrene, 2-methylstyrene, 3-methylstyrene and 4-methylstyrene.

According to a specific embodiment of the invention, the alkenyl-containing functional monomer is an alkenyl-containing silane monomer, the alkenyl-containing silane monomer selected from at least one of vinyltriethoxysilane, vinyltrimethoxysilane, vinyltriisopropoxysilane, vinyltri-tert-butoxysilane, vinyltriacetoxysilane, methylvinyldimethoxysilane, ethylvinyldiethoxysilane, allyltriethoxysilane, allyltrimethoxysilane, allyltriisopropoxysilane, vinyltris(β-methoxyethoxy)silane, allyltris(β-methoxyethoxy)silane, allyltri-tert-butoxysilane, allyltriacetoxysilane, methylallyldimethoxysilane and ethylallyldiethoxysilane.

According to a specific embodiment of the invention, the alkenyl-containing functional monomer is an acrylate monomer and an optional acrylic monomer, preferably, the acrylate monomer is selected from at least one of methyl (methyl)acrylate, sec-butyl (methyl)acrylate, ethyl (methyl)acrylate, n-butyl (methyl)acrylate, isobutyl (methyl)acrylate, tert-butyl (methyl)acrylate, isooctyl (methyl)acrylate, dodecyl (methyl)acrylate, cocinin (methyl)acrylate, octadecyl (methyl)acrylate, dimethylaminoethyl (methyl)acrylate, diethylaminoethyl (methyl)acrylate, dimethylaminopropyl (methyl)acrylate, and glycidyl (methyl)acrylate. Preferably, the acrylic monomer is selected from at least one of acrylic acid, methacrylic acid and 2-ethylacrylic acid.

In the invention, the $C_3$-$C_{12}$ epoxyalkylalkyl refers to epoxyalkyl-substituted alkyl having 3 to 12 carbon atoms,

e.g., oxiranylmethyl.

In the invention, the structural units derived from the acrylic monomer may be absent or may be present together with the structural units derived from the acrylate monomer, preferably, the molar ratio of the structural units derived from the acrylate monomer to the structural units derived from the acrylic monomer is 1: 0-2, preferably 1: 0.125-1.

According to a specific embodiment of the invention, the alkenyl-containing functional monomer is an alkenyl-containing heterocyclic monomer. The alkenyl-containing heterocyclic monomer of the invention may be any alkenyl-containing heterocyclic compound capable of undergoing radical polymerization, which may be selected from at least one of alkenyl-containing imidazoles, alkenyl-containing pyrazoles, alkenyl-containing carbazoles, alkenyl-containing pyrrolidones, alkenyl-containing pyridines or pyridiniums, alkenyl-containing piperidines, alkenyl-containing caprolactams, alkenyl-containing pyrazines, alkenyl-containing thiazoles, alkenyl-containing purines, alkenyl-containing morpholines and alkenyl-containing oxazolines; preferably, the alkenyl-containing heterocyclic monomer is a monoalkenyl-containing heterocyclic monomer.

Specifically, the alkenyl-containing heterocyclic monomer is selected from: at least one of 1-vinyl imidazole, 2-methyl-1-vinyl imidazole, N-allyl imidazole, 1-vinyl pyrazole, 3-methyl-1-vinyl pyrazole, vinyl carbazole, N-vinyl pyrrolidone, 2-vinyl pyridine, 3-vinyl pyridine, 4-vinyl pyridine, 2-methyl-5-vinyl pyridine, vinyl pyridine N oxide, vinyl pyridinium, vinyl piperidine, N-vinyl caprolactam, 2-vinyl pyrazine, N-vinyl piperazine, 4-methyl-5-vinyl thiazole, N-vinyl purine, vinyl morpholine and vinyl oxazoline.

Further, the alkenyl-containing polymerizable monomer is selected from at least one of vinyl acetate, styrene, $\alpha$-methylstyrene, (meth)acrylate, vinyl alkyl ether, vinyl pyrrolidone, vinyl pyridine, vinyl imidazole and acrylonitrile; the (meth)acrylate is preferably selected from at least one of methyl (meth)acrylate, ethyl (meth)acrylate, and glycidyl (meth)acrylate; preferably, the alkenyl-containing polymerizable monomer is selected from vinyl acetate, styrene, $\alpha$-methylstyrene; further preferably, the alkenyl-containing polymerizable monomer is styrene.

According to the invention, preferably, the modified flexible polypropylene insulating material comprises modified polypropylene (A) which is polypropylene graft-modified with a first unsaturated bond-containing polymerizable monomer, and low-modulus polypropylene (B) which is unmodified low-modulus polypropylene and/or low-modulus polypropylene graft-modified with a second unsaturated bond-containing polymerizable monomer;

preferably, the first unsaturated bond-containing polymerizable monomer and the second unsaturated bond-containing polymerizable monomer are each independently an alkenyl-containing functional monomer and optionally an anhydride monomer;

preferably, the content of the modified polypropylene (A) is 20-80 wt%, preferably 30-70 wt%, and more preferably 35-65 wt%, and the content of the low-modulus polypropylene (B) is 20-80 wt%, preferably 30-70 wt%, and more preferably 35-65 wt%, based on the total weight of the modified flexible polypropylene insulating material.

In one embodiment, the modified flexible polypropylene insulating material comprises a polypropylene (A) graft-modified with an alkenyl-containing functional monomer, and a low-modulus polypropylene (B) which is unmodified low-modulus polypropylene and/or low-modulus polypropylene graft-modified with an alkenyl-containing functional monomer.

In another embodiment, the modified flexible polypropylene insulating material comprises a modified polypropylene (A) which is a polypropylene graft-modified with an alkenyl-containing functional monomer and optionally graft-modified with an anhydride monomer, and a low-modulus polypropylene (B) which is an unmodified low-modulus polypropylene and/or a low-modulus polypropylene graft-modified with an alkenyl-containing functional monomer and optionally graft-modified with an anhydride monomer. That is, the modified polypropylene (A) may be a polypropylene graft-modified with an alkenyl-containing functional monomer, or a polypropylene graft-modified with dual monomers comprising an alkenyl-containing functional monomer and an anhydride monomer, and the low-modulus polypropylene (B) may be an unmodified low-modulus polypropylene, or a low-modulus polypropylene graft-modified with an alkenyl-containing functional monomer, or a low-modulus polypropylene graft-modified with dual monomers comprising an alkenyl-containing functional monomer and an anhydride monomer, or a mixture thereof. When the modified polypropylene (A) is a polypropylene graft-modified with an alkenyl-containing functional monomer, the low-modulus polypropylene (B) must be a low-modulus polypropylene graft-modified with dual monomers comprising an alkenyl-containing functional monomer and an anhydride monomer. When the modified polypropylene (A) is a polypropylene graft-modified with dual monomers comprising an alkenyl-containing functional monomer and an anhydride monomer, the low-modulus polypropylene (B) may be an unmodified low-modulus polypropylene, a low-modulus polypropylene graft-modified with an alkenyl-containing functional monomer, or a low-modulus polypropylene graft-modified with dual monomers comprising an alkenyl-containing functional monomer and an anhydride monomer. The invention has no special requirements for the grafting component content of each raw material, as long as the total grafting amount of the above modified flexible polypropylene insulating material is satisfied.

In the three-phase structure of the modified flexible polypropylene insulating material of the present invention, the graft-modified polypropylene (A) at least provides a propylene-based continuous phase and a grafted phase; the

low-modulus polypropylene (B) provides a propylene-based continuous phase and a rubber phase, and optionally a grafted phase.

According to the invention, the modified flexible polypropylene insulating material can be prepared by blending the modified polypropylene (A) with the low-modulus polypropylene (B).

In the invention, the modified polypropylene (A) comprises structural units derived from homo- or co-polypropylene and structural units derived from an unsaturated bond-containing polymerizable monomer; the content of the structural units derived from the unsaturated bond-containing polymerizable monomer and in a grafted state in the modified polypropylene (A) is 0.1-20 wt%, preferably 1-15 wt%, based on the weight of the modified polypropylene (A).

In one embodiment, the modified polypropylene (A) comprises structural units derived from homo- or co-polypropylene and structural units derived from an alkenyl-containing functional monomer; the content of the structural units derived from the alkenyl-containing functional monomer and in a grafted state in the modified polypropylene (A) is 0.5-20 wt%, preferably 1-15 wt%, based on the weight of the modified polypropylene (A).

In another embodiment, the modified polypropylene (A) comprises structural units derived from homo- or co-polypropylene, and structural units derived from an alkenyl-containing functional monomer and optionally structural units derived from an anhydride monomer; the content of the structural units in a grafted state in the modified polypropylene (A) is 0.1-10 wt%, preferably 1-5 wt%, based on the weight of the modified polypropylene (A).

The term "structural unit" means that it is a part of the modified polypropylene (A), and the form thereof is not limited. Specifically, the term "structural units derived from homo- or co-polypropylene" refers to products formed from homo- or co-polypropylene, including not only those in "group" form but also those in "polymer" form. The term "structural units derived from an unsaturated bond-containing polymerizable monomer" refers to products formed from an unsaturated bond-containing polymerizable monomer, including not only those in "group" form, but also those in "monomer" form, as well those in "polymer" form. The term "structural units derived from an alkenyl-containing functional monomer" refers to products formed from an alkenyl-containing functional monomer, including not only those in "group" form, but also those in "monomer" form, as well those in "polymer" form. The term "structural units derived from a (maleic) anhydride monomer" refers to products formed from a (maleic) anhydride monomer, including not only those in "group" form, but also those in "monomer" form, as well those in "polymer" form. Said "structural unit" may be a repeating unit or a non-repeating independent unit.

In the invention, the term "comonomer" of the polypropylene copolymer is known to those of ordinary skill in the art, and means a monomer copolymerized with propylene.

According to a preferred embodiment of the invention, the homo- or co-polypropylene has at least one of the following characteristics: the comonomer content is 0-15 mol%, preferably 0-12 mol%, more preferably 0-8 mol%; the melt flow rate under a load of 2.16 kg at 230°C is 1-10 g/10 min, preferably 2-5 g/10 min; the melting temperature Tm is 110-180°C, further preferably 120-170°C; the weight average molecular weight is $20\times10^4$-$50\times10^4$ g/mol; the flexural modulus is 500-2000 MPa, preferably 600-1700 MPa; the elongation at break is $\geq$ 200%, preferably $\geq$ 300%, the tensile strength is greater than 5 MPa, preferably 10-40 MPa; the content of xylene solubles is less than 15 wt%, preferably 0.5-8 wt%.

According to a preferred embodiment of the invention, the comonomer of the co-polypropylene is selected from at least one of $C_2$-$C_8$ $\alpha$-olefins (ethylene is considered herein to be $\alpha$-olefin) other than propylene; the comonomer of the co-polypropylene is selected from at least one of ethylene and $C_4$-$C_8$ $\alpha$-olefin; preferably, the comonomer of the co-polypropylene is selected from at least one of ethylene, 1-butene, 1-pentene, 4-methyl-1 -pentene, 1-hexene, 1-heptene and 1-octene; further preferably, the comonomer of the co-polypropylene is ethylene and/or 1-butene; the comonomer content is 0.1-15 mol%, preferably 0.1-12 mol%, and more preferably 0.1-8 mol%, based on the total molar amount of the monomers. The co-polypropylene of the invention is preferably a porous granular or powdery resin.

The homo- or co-polypropylene of the invention can be any commercially available polypropylene powder suitable for the invention, and can also be produced by the polymerization processes recited in the Chinese patents CN102453180B, CN101490096B, CN102816269B, CN102816270B and the like.

The term "low-modulus polypropylene" according to the invention is well known to those skilled in the art and is preferably a copolymer of propylene with ethylene or a higher alpha-olefin (preferably $C_4$-$C_8$ alpha-olefin), preferably an ethylene-propylene copolymer, having a flexural modulus of less than 300 MPa; specifically, the copolymer of propylene with ethylene or a higher alpha-olefin comprises a propylene homopolymer and/or propylene random copolymer matrix component (1) as a matrix phase and, dispersed therein, as a dispersed phase, another propylene copolymer component (2) comprising one or more ethylene or higher alpha-olefin (preferably $C_4$-$C_8$ alpha-olefin) comonomers. In the propylene random copolymer, the comonomers are randomly distributed in the main chain of the propylene polymer. Preferably, the propylene copolymer (2) dispersed in the homopolymer or copolymer matrix (1) of the low-modulus polypropylene is substantially amorphous. The term "substantially amorphous" means herein that the propylene copolymer (2) has a lower crystallinity than the homopolymer or copolymer matrix (1).

The low-modulus polypropylene may be of sea-island structure or co-continuous structure. Preferably, the low-modulus polypropylene of the invention is a heterophasic propylene copolymer prepared *in situ* in a reactor according

to existing processes.

According to the invention, preferably, the low-modulus polypropylene has at least one of the following characteristics: the comonomer content is 8-25 wt%, preferably 10-22 wt%; the content of xylene solubles is 18-75 wt%, preferably 30-70 wt%, and more preferably 30-67 wt%; the melt flow rate under a load of 2.16 kg at 230°C is 0.1-15 g/10min, preferably 0.2-7 g/10 min; the melting temperature Tm is 120-165°C, and further preferably 125-150°C; the flexural modulus is 10-300 MPa, preferably 15-250 MPa; the comonomer content in the xylene solubles is 10-50 wt%, preferably 20-35 wt%; the intrinsic viscosity ratio of the xylene solubles to the low-modulus polypropylene is 0.5-3, preferably 0.8-1.3; the weight average molecular weight is $25\times10^4$-$70\times10^4$ g/mol.

The low-modulus polypropylene described in the invention includes, but is not limited to, any commercially available polypropylene powder and pellets suitable for the invention, and can also be produced by the polymerization processes recited in the Chinese patents CN1069908C, CN1049932C, CN1108315C, CN1117610C, CN1132865C, CN102020733B, and the like. Common polymerization processes include Spheripol process from Basell, Hypol process from Mitsui oil chemical, Borstar PP process from Borealis, Unipol process from DOW chemical, Innovene gas phase process from INEOS (original BP-Amoco), and the like.

In the invention, the term "low-modulus polypropylene" generally refers to ungrafted (i.e., unmodified) low-modulus polypropylene when grafting is not specified.

According to the invention, the content of the structural units in a grafted state in the low-modulus polypropylene (B) is 0-5 wt%, preferably 0.2-2.5 wt%, based on the weight of the low-modulus polypropylene (B).

In one embodiment, when the low-modulus polypropylene (B) is a low-modulus polypropylene graft-modified with an alkenyl-containing functional monomer, the content of the structural units derived from the alkenyl-containing functional monomer and is in a grafted state in the low-modulus polypropylene graft-modified with the alkenyl-containing functional monomer is 0.1-5 wt%, preferably 0.2-2.5 wt%, based on the weight of the low-modulus polypropylene graft-modified with the alkenyl-containing functional monomer.

In another embodiment, when the low-modulus polypropylene (B) is a low-modulus polypropylene graft-modified with an alkenyl-containing functional monomer and an anhydride monomer, the content of the structural units in a grafted state in the low-modulus polypropylene graft-modified with the alkenyl-containing functional monomer and the anhydride monomer is 0.1-5 wt%, preferably 0.5-2.5 wt%, based on the weight of the low-modulus polypropylene graft-modified with the alkenyl-containing functional monomer and the anhydride monomer.

The invention also provides a method for preparing the modified flexible polypropylene insulating material, which comprises the following steps: blending modified polypropylene (A) and low-modulus polypropylene (B) to prepare the modified flexible polypropylene insulating material, wherein the modified polypropylene (A) is polypropylene graft-modified with a first unsaturated bond-containing polymerizable monomer, and the low-modulus polypropylene (B) is unmodified low-modulus polypropylene and/or low-modulus polypropylene graft-modified with a second unsaturated bond-containing polymerizable monomer.

Preferably, the first unsaturated bond-containing polymerizable monomer and the second unsaturated bond-containing polymerizable monomer are each independently an alkenyl-containing functional monomer and optionally an anhydride monomer.

Preferably, the content of the modified polypropylene (A) is 20-80 wt%, preferably 30-70 wt%, and more preferably 35-65 wt%, and the content of the low-modulus polypropylene (B) is 20-80 wt%, preferably 30-70 wt%, and more preferably 35-65 wt%, based on the total weight of the modified flexible polypropylene insulating material.

According to a preferred embodiment of the invention, the preparation method comprises the following steps:

S1: subjecting a reaction mixture A comprising homo- or co-polypropylene and a first unsaturated bond-containing polymerizable monomer to grafting reaction in the presence of an inert gas, to obtain a modified polypropylene; optionally, subjecting a reaction mixture B comprising a low-modulus polypropylene and a second unsaturated bond-containing polymerizable monomer to grafting reaction in the presence of an inert gas, to obtain a modified low-modulus polypropylene;

S2: mixing the modified polypropylene with an unmodified low-modulus polypropylene and/or the modified low-modulus polypropylene and optional additives, and extruding and granulating to obtain the modified flexible polypropylene insulating material.

Preferably, the first unsaturated bond-containing polymerizable monomer and the second unsaturated bond-containing polymerizable monomer are each independently an alkenyl-containing functional monomer and optionally an anhydride monomer. The grafting monomer is determined according to the target grafted product.

Preferably, the grafting sites are initiated by a free radical initiator and the grafting reaction proceeds further. In this case, the reaction mixture A and the reaction mixture B also each independently comprise a free radical initiator.

Wherein, the peroxide-based radical initiator is preferably selected from at least one of dibenzoyl peroxide, dicumyl peroxide, di-tert-butyl peroxide, lauroyl peroxide, dodecyl peroxide, tert-butyl peroxybenzoate, diisopropyl peroxydicarbonate, tert-butyl peroxy (2-ethylhexanoate) and dicyclohexyl peroxydicarbonate; the azo-based radical initiator is preferably azobisisobutyronitrile and/or azobisisoheptonitrile.

More preferably, the grafting sites are initiated by a peroxide-based free radical initiator and the grafting reaction proceeds further.

Furthermore, the grafting reaction of the invention can also be carried out according to the methods described in CN106543369A, CN104499281A, CN102108112A, CN109251270A, CN1884326A and CN 101492517B.

The amount of each component used in the grafting reaction of the invention is not particularly limited on the premise that the above-mentioned product characteristics are satisfied, and specifically, the ratio of the mass of the radical initiator to the total mass of the unsaturated bond-containing polymerizable monomers is 0.01-10: 100, preferably 0.5-6: 100. The mass ratio of the first unsaturated bond-containing polymerizable monomer to the homo- or co-polypropylene is 0.5-35: 100, preferably 2-30: 100, and more preferably 2.5-25: 100. The mass ratio of the second unsaturated bond-containing polymerizable monomer to the low-modulus polypropylene is 0.1-20:100, preferably 0.2-15:100, and more preferably 0.5-10: 100.

In one embodiment, when both the first unsaturated bond-containing polymerizable monomer and the second unsaturated bond-containing polymerizable monomer are alkenyl-containing functional monomers, the mass ratio of the radical initiator to the alkenyl-containing functional monomers is 0.01-10: 100, preferably 0.5-5: 100. The mass ratio of the alkenyl-containing functional monomers to the homo- or co-polypropylene is 0.5-35: 100, preferably 2-30: 100, and further preferably 5-25: 100; the mass ratio of the alkenyl-containing functional monomers to the low-modulus polypropylene is 0.1-20: 100, preferably 0.2-10: 100, and more preferably 0.5-5: 100.

In another embodiment, when the first unsaturated bond-containing polymerizable monomer and/or the second unsaturated bond-containing polymerizable monomer include an alkenyl-containing functional monomer and an anhydride monomer, the ratio of the mass of the radical initiator to the total mass of the unsaturated bond-containing polymerizable monomers in the reaction system may be 0.1-10:100, preferably 0.5-6: 100. The mass ratio of the total mass of the first unsaturated bond-containing polymerizable monomer to the homo- or co-polypropylene may be 0.5-35: 100, preferably 2-30: 100, and more preferably 2.5-20: 100; the mass ratio of the total mass of the second unsaturated bond-containing polymerizable monomer to the low-modulus polypropylene may be 0.5-15: 100, preferably 2-10: 100; when the unsaturated bond-containing polymerizable monomer includes an alkenyl-containing functional monomer and an anhydride monomer, the mass ratio of the alkenyl-containing functional monomer to the anhydride monomer may be 0.5-10: 1, preferably 2-8: 1.

The invention also has no special limitation on the technical conditions of the grafting reaction, preferably, the grafting reaction is a solid phase grafting reaction. Specifically, the temperature of the grafting reaction is 30-130°C, and preferably 60-120°C; the time is 0.5-10 h, and preferably 1-6 h.

In the invention, the term "reaction mixture" includes all materials added to the grafting reaction system, and the materials may be added at one time or at different stages of the reaction.

The reaction mixture A and the reaction mixture B of the invention may also each independently comprise a dispersant, wherein the dispersant is preferably water or an aqueous solution of sodium chloride. The mass content of the dispersant is preferably 50-300% of the mass of the polypropylene.

The reaction mixture A and the reaction mixture B of the invention may further each independently comprise an interfacial agent, wherein the interfacial agent is an organic solvent having a swelling effect on polyolefin, and is preferably at least one of the following organic solvents having a swelling effect on polypropylene: ether solvents, ketone solvents, aromatic hydrocarbon solvents, and alkane solvents; more preferably at least one of the following organic solvents: chlorobenzene, polychlorinated benzene, alkanes or cycloalkanes of $C_6$ or more, benzene, $C_1$-$C_4$ alkyl substituted benzene, $C_2$-$C_6$ fatty ethers, $C_3$-$C_6$ fatty ketones and decalin; further preferably at least one of the following organic solvents: benzene, toluene, xylene, chlorobenzene, tetrahydrofuran, diethyl ether, acetone, hexane, cyclohexane, decalin, heptane. The mass content of the interfacial agent is preferably 1-30%, and more preferably 10-25%, of the mass of the polypropylene.

The reaction mixture A and the reaction mixture B of the invention may further each independently comprise an organic solvent as a solvent for dissolving the solid radical initiator, the organic solvent preferably comprising at least one of $C_2$-$C_5$ alcohols, $C_2$-$C_4$ ethers and $C_3$-$C_5$ ketones, more preferably comprising at least one of $C_2$-$C_4$ alcohols, $C_2$-$C_3$ ethers and $C_3$-$C_5$ ketones, and most preferably at least one of ethanol, diethyl ether and acetone. The mass content of the organic solvent is preferably 1-35% of the mass of the polypropylene.

According to a preferred embodiment of the invention, the preparation method comprises the following steps:

a. placing a homo- or co-polypropylene in a closed reactor, followed by inert gas replacement;
b. adding a free radical initiator and a first unsaturated bond-containing polymerizable monomer to the closed reactor, and mixing with stirring;
c. optionally adding an interfacial agent and optionally swelling the reaction system;
d. optionally adding a dispersant, and heating the reaction system to the grafting reaction temperature, to carry out

the grafting reaction;
e. after the end of the reaction, optionally filtering (in the case of using an aqueous phase dispersant), drying to obtain a modified polypropylene;
f. mixing the modified polypropylene with ungrafted and/or grafted low-modulus polypropylene and optional aids, melt extruding and granulating, to obtain the modified flexible polypropylene insulating material;

wherein, the preparation method of the grafted low-modulus polypropylene comprises the following steps:

i. placing a low-modulus polypropylene in a closed reactor, followed by inert gas replacement;
ii. adding a free radical initiator and a second unsaturated bond-containing polymerizable monomer to the closed reactor, and mixing with stirring;
iii. optionally adding an interfacial agent and optionally swelling the reaction system;
iv. optionally adding a dispersant, and heating the reaction system to the grafting reaction temperature, to carry out the grafting reaction;
v. after the end of the reaction, optionally filtering (in the case of using an aqueous phase dispersant), drying to obtain a modified low-modulus polypropylene.

Specifically, the preparation method comprises the following steps:

a. placing a homo- or co-polypropylene in a closed reactor, followed by inert gas replacement;
b. adding a free radical initiator and a first unsaturated bond-containing polymerizable monomer to the closed reactor, and mixing with stirring;
c. adding 0-30 parts of an interfacial agent, and optionally swelling the reaction system at 20-60°C for 0-24 h;
d. adding 0-300 parts of a dispersant, and heating the system to the graft polymerization temperature of 30-130°C, to carry out the reaction for 0.5-10 h;
e. after the end of the reaction, optionally filtering (in the case of using an aqueous phase dispersant), drying to obtain a modified polypropylene;
f. weighing the modified polypropylene and ungrafted and/or grafted low-modulus polypropylene and optional aids in proportions, mixing and granulating by using a twin-screw extruder at a melting temperature of 180-230 °C and a screw speed of 30-600 rpm, to obtain the modified flexible polypropylene insulating material;

wherein, the preparation method of the grafted low-modulus polypropylene comprises the following steps:

i. placing a low-modulus polypropylene in a closed reactor, followed by inert gas replacement;
ii. adding a free radical initiator and a second unsaturated bond-containing polymerizable monomer to the closed reactor, and mixing with stirring;
iii. adding 0-30 parts of an interfacial agent, and optionally swelling the reaction system at 20-60°C for 0-24 h;
iv. adding 0-300 parts of a dispersant, and heating the system to the graft polymerization temperature of 30-130°C, to carry out the reaction for 0.5-10 h;
v. after the end of the reaction, optionally filtering (in the case of using an aqueous phase dispersant), drying to obtain a modified low-modulus polypropylene.

According to another preferred embodiment of the invention, the preparation method comprises the following steps:

a. placing a homo- or co-polypropylene in a closed reactor, followed by inert gas replacement;
b. mixing an organic solvent and a free radical initiator, and adding the mixture to the closed reactor;
c. removing the organic solvent;
d. adding a first unsaturated bond-containing polymerizable monomer, optionally adding an interfacial agent, and optionally swelling the reaction system;
e. optionally adding a dispersant, and heating the reaction system to the grafting reaction temperature, to carry out the grafting reaction;
f. after the end of the reaction, optionally filtering (in the case of using an aqueous phase dispersant), drying to obtain a modified polypropylene;
g. weighing the modified polypropylene and ungrafted and/or grafted low-modulus polypropylene and optional aids in proportions, mixing, melt extruding and granulating, to obtain the modified flexible polypropylene insulating material;

wherein, the preparation method of the grafted low-modulus polypropylene comprises the following steps:

i. placing a low-modulus polypropylene in a closed reactor, followed by inert gas replacement;
ii. mixing an organic solvent and a free radical initiator, and adding the mixture to the closed reactor;
iii. removing the organic solvent;
iv. adding a second unsaturated bond-containing polymerizable monomer, optionally adding an interfacial agent, and optionally swelling the reaction system;
v. optionally adding a dispersant, and heating the reaction system to the grafting reaction temperature, to carry out the grafting reaction;
vi. after the end of the reaction, optionally filtering (in the case of using an aqueous phase dispersant), drying to obtain a modified low-modulus polypropylene.

Specifically, the preparation method comprises the following steps:

a. placing a homo- or co-polypropylene in a closed reactor, followed by inert gas replacement;
b. mixing an organic solvent and a free radical initiator, and adding the mixture to the closed reactor;
c. removing the organic solvent;
d. adding a first unsaturated bond-containing polymerizable monomer, adding 0-30 parts of an interfacial agent, and optionally swelling the reaction system at 20-60°C for 0-24 h;
e. adding 0-300 parts of a dispersant, and heating the system to the graft polymerization temperature of 30-130°C, to carry out the reaction for 0.5-10 h;
f. after the end of the reaction, optionally filtering (in the case of using an aqueous phase dispersant), drying to obtain a modified polypropylene;
g. weighing the modified polypropylene and ungrafted and/or grafted low-modulus polypropylene and optional aids in proportions, mixing and granulating by using a twin-screw extruder at a melting temperature of 180-230 °C and a screw speed of 30-600 rpm, to obtain the modified flexible polypropylene insulating material;

wherein, the preparation method of the grafted low-modulus polypropylene comprises the following steps:

i. placing a low-modulus polypropylene in a closed reactor, followed by inert gas replacement;
ii. mixing an organic solvent and a free radical initiator, and adding the mixture to the closed reactor;
iii. removing the organic solvent;
iv. adding a second unsaturated bond-containing polymerizable monomer, adding an interfacial agent, preferably 0-30 parts, and optionally swelling the reaction system, preferably at 20-60°C for 0-24 h;
v. optionally adding a dispersant, preferably 0-300 parts, heating the system to the graft polymerization temperature, preferably 30-130°C, to carry out the reaction, preferably for 0.5-10 h;
vi. after the end of the reaction, optionally filtering (in the case of using an aqueous phase dispersant), drying to obtain a modified low-modulus polypropylene.

According to the method of the invention, if volatile components are present in the system after the end of the reaction, the method of the invention preferably comprises a step of devolatilization, which can be carried out by any conventional method, including vacuum extraction or the use of a stripping agent at the end of the grafting reaction. Suitable stripping agent includes, but is not limited to, an inert gas.

As described above, the term "modified polypropylene" or "modified low-modulus polypropylene" in the invention includes not only a product (crude product) obtained directly by grafting reaction of polypropylene/low-modulus polypropylene and an unsaturated bond-containing polymerizable monomer, but also a graft-modified polypropylene pure product obtained by further purifying the product. Therefore, the preparation method of the invention optionally comprises a step of purifying the crude product. The purification can be carried out by various methods which are conventional in the art, such as extraction.

The invention has no particular limitation on the grafting efficiency of the grafting reaction, but a higher grafting efficiency is more advantageous for obtaining a polypropylene material graft-modified with an unsaturated bond-containing polymerizable monomer having desired properties by a one-step grafting reaction. Therefore, the grafting efficiency of the grafting reaction is preferably controlled to be 20-100%, and more preferably 25-80%. The term "grafting efficiency" is well known to those of ordinary skill in the art, and refers to the amount of unsaturated bond-containing polymerizable monomer on the graft per total amount of unsaturated bond-containing polymerizable monomer charged to the reaction.

The inert gas of the invention may be various inert gases commonly used in the art, including but not limited to nitrogen, argon.

In the method of the invention, the manner of mixing the graft-modified polypropylene with the low-modulus polypropylene and optional additives may be mechanical mixing, preferably twin-screw mechanical blending. The additive is, e.g., any one or more selected from antioxidants, stabilizers, processing aids. The types and amounts of additives used are conventional and known to those of ordinary skill in the art.
The above modified flexible polypropylene insulating material of the invention can be applied to the field of cables, for example, as an insulating material.
The invention will be further described with reference to the following examples, but the scope of the invention is not limited to these examples.

## Test methods

### 1. Determination of the comonomer content in the polypropylene:

The comonomer content was determined by Spectrum Two type quantitative Fourier Transform Infrared (FTIR) spectroscopy from Perkinelmer company. The correlation of the determined comonomer content was calibrated by quantitative Nuclear Magnetic Resonance (NMR) spectroscopy. The calibration method based on the results obtained from quantitative $^{13}C$-NMR spectroscopy was carried out according to a conventional method in the art.

### 2. Determination of the content of xylene solubles (XS):

The test was carried out according to the method specified in GB/T242 82-2009.

### 3. Determination of the comonomer content in the xylene solubles in the low-modulus polypropylene (XSC2) and the intrinsic viscosity ratio of the xylene solubles to the low-modulus polypropylene:

The test was carried out using a CRYST-EX instrument from Polymer Char company according to the following steps: dissolving with trichlorobenzene solvent by heating to 150°C, keeping the temperature for 90 min, sampling and testing, then cooling to 35°C, keeping the temperature for 70 min, sampling and testing.

### 4. Determination of the weight average molecular weight ($M_w$) of the polypropylene:

The sample was dissolved in 1,2,4-trichlorobenzene at a concentration of 1.0 mg/ml and determined by high temperature GPC using PL-GPC 220 type gel permeation chromatograph from Polymer Laboratory company. The test temperature was 150°C and the solution flow rate was 1.0 ml/min. A standard curve was plotted by taking the molecular weight of polystyrene as an internal reference, and the molecular weight and molecular weight distribution of the sample were calculated according to the outflow time.

### 5. Determination of the melt flow rate MFR:

The test was carried out at 230°C under a load of 2.16 kg using 7026 type melt index apparatus from CEAST, according to the method specified in GB/T3682-2018.

### 6. Determination of the melting temperature Tm:

The melting and crystallization processes of the material were analyzed by DSC25 type differential scanning calorimetry from TA company, USA. The specific operation was as follows: under the protection of nitrogen, 5-10 mg of a sample was measured by a three-stage temperature rise and fall measurement method from 20°C to 200°C, the melting and crystallization processes of the material were reflected by the change of heat flow, and the melting temperature Tm was determined during the secondary heating process.

### 7. Determination of the grafting efficiency GE, the parameters M1, M2:

2-4 g of the grafted product or crushed composite material particle was put into a Soxhlet extractor, and extracted with an organic solvent (ethyl acetate for aromatic olefin monomers, acrylate monomers and anhydride; acetone for silane monomers) for 24 hours, unreacted monomers and homopolymers were removed, and a pure grafted product was obtained, which was dried and weighed. Then, the parameters Mn, M1, M2 and the grafting efficiency GE were calculated.

(1) The unsaturated bond-containing polymerizable monomer is an alkenyl-containing functional monomer

Parameter Mn (n=A or B) represents the content of the structural units derived from the alkenyl-containing polymerizable monomer and in a grafted state in the component A or component B, and parameter M1 represents the content of the structural units derived from the alkenyl-containing polymerizable monomer and in a grafted state in the composite material, which are calculated from $M_A$ and $M_B$. The calculation formulas of M1 and Mn in the invention are as follows:

$$Mn=\frac{w_2-w_0}{w_1}\times 100\%$$

$$M1=\frac{M_A\times m_A+M_B\times m_B}{m_{product}}\times 100\%$$

$$GE=\frac{w_2-w_0}{w_3}\times 100\%$$

In the above formulas, $w_0$ denotes the mass of the PP matrix; $w_1$ denotes the mass of the grafted product before extraction; $w_2$ denotes the mass of the grafted product after extraction; $w_3$ denotes the mass of the alkenyl-containing functional monomer added; $m_A$ denotes the mass of the component A in the composite material, $m_B$ denotes the mass of the component B in the composite material, $m_{product}$ denotes the mass of the composite material.

(2) The unsaturated bond-containing polymerizable monomer is an anhydride monomer and an alkenyl-containing polymerizable monomer

Parameter Mn (n=A or B) represents the content of the structural units derived from the anhydride monomer and the alkenyl-containing polymerizable monomer and in a grafted state in the component A or component B, and parameter M1 represents the content of the structural units derived from the anhydride monomer and the alkenyl-containing polymerizable monomer and in a grafted state in the composite material, which are calculated from $M_A$ and $M_B$. Parameter M2 represents the content of the structural units derived from the anhydride monomer and in a grafted state in the composite material. The calculation formulas of M1, M2 and Mn in the invention are as follows:

$$Mn=\frac{w_2-w_0}{w_1}\times 100\%$$

$$M1=\frac{M_A\times m_A+M_B\times m_B}{m_{product}}\times 100\%$$

$$M2=\frac{w_4\times \%G_{MAH}}{m_{product}}\times 100\%$$

$$GE=\frac{w_2-w_0}{w_3}\times 100\%$$

In the above formulas, $w_0$ denotes the mass of the PP matrix; $w_1$ denotes the mass of the grafted product before extraction; $w_2$ denotes the mass of the grafted product after extraction; $w_3$ denotes the total mass of the grafting monomers added; $w_4$ denotes the mass of the composite material after extraction. $m_A$ denotes the mass of the component A in the composite material, $m_B$ denotes the mass of the component B in the composite material, $m_{product}$ denotes the mass of the composite material, $\%G_{MAH}$ denotes the mass content of maleic anhydride. The mass content $\%G_{MAH}$ of maleic anhydride in the composite material was determined and calculated according to the method described in the reference document (Zhang Guangping, Solid Phase Graft of Maleic Anhydride onto Polypropylene in Helical Ribbon

Reactor, China Plastics, Vol. 16, No. 2, Feb., 2002, 69-71).

**8. Determination of the direct current volume resistivity:**

The sample to be tested was hot pressed into a sample sheet of 100 ± 10 micron at 210°C using a vulcanizing press, placed in an oven, and subjected to short-circuit treatment at 80°C for 6 h to remove residual interference charge on the surface and inside of the sample sheet. Before the test, the sample sheet was wiped with alcohol to remove surface impurities. The test of the sample sheet was carried out according to the method specified in GB/T1410-2006. The testing surface of the sample sheet was subjected to metal spraying treatment. An upper electrode with a diameter of 1 cm and a lower electrode with a diameter of 4 cm were used. The output voltage was 10 kV, the sampling time was 600 s, and the sampling step length was 15 kV/mm. Each sample was determined at 3 points and averaged.

**9. Determination of the breakdown field strength:**

The sample to be tested was hot pressed into a sample sheet of 100 ± 10 micron at 210°C using a vulcanizing press, placed in an oven, and subjected to short-circuit treatment at 80°C for 6 h to remove residual interference charge on the surface and inside of the sample sheet. Before the test, the sample sheet was wiped with alcohol to remove surface impurities. The test of the sample sheet was carried out according to the method specified in GB/T1408-2006. The voltage-rising speed was 1 kV/s, and the breakdown field strength at 20 points was determined for each sample. Then, two-parameter Weibull distribution was used to process the experimental data, to obtain the characteristic breakdown field strength.

**10. Determination of the tensile Strength:**

The sample to be tested was injected into a sample bar at 200-220°C, wherein the injection rate was 55 mm/s, the cooling time of the sample in the injection mold was 10 s, and the sample was drawn into a dumbbell-shaped sample bar of 150 mm × 10 mm × 4 mm. After injection molding, the sample bar needed to be placed aside for 24 h. Then, the test was carried out according to the method specified in GB/T1040.2-2006. The drawing speed of the sample was selected to be 50 mm/min.

**11. Determination of the flexural modulus:**

The sample to be tested was injected into a sample bar at 200-220°C, wherein the injection rate was 55 mm/s, the cooling time of the sample in the injection mold was 10 s, and the sample was bent into a rectangular sample bar of 80 mm × 10 mm × 4 mm. The test was carried out according to the method specified in GB/T9341-2008.

**12. Determination of the elongation at break:**

The test was carried out according to the method specified in GB/T1040-2006. The sample preparation and test conditions are the same as those for the determination of the tensile strength.

**13. Determination of the dielectric constant:**

The test was carried out according to the method specified in GB/T1409-2006.

**14. Characterization of the rubber phase:**

1 to 2 composite material sample strips with a length of 5-10 cm were taken during twin-screw extrusion and granulation. The composite material sample strips were soaked in liquid nitrogen for 15 min, and then subjected to brittle fracture. The fracture surface of the sample strips was soaked in xylene at room temperature for 24 h, then soaked in clear water with ultrasound for 15 min, finally washed with alcohol, and dried in air. The fracture surface of the sample strips was subjected to metal spraying treatment, and then characterized by a thermal field emission scanning electron microscope (NanoSEM 450 from FEI company, USA).

**15. Characterization of grafted phase and calculation of D50**

The composite material sample strips were soaked in liquid nitrogen for 15 min and then subjected to brittle fracture. The fracture surface was subjected to metal spraying treatment, and then characterized by a thermal field

emission scanning electron microscope (NanoSEM 450 from FEI company, USA), to obtain a micro-morphology picture. Through analysis software, 200 dispersed phases were taken for each sample and the diameter was measured, and D50 was calculated using data processing software. D50 represents the median particle size, that is, the particle size corresponding to the cumulative particle size distribution percentage of a sample reaching 50%.

**16. Characterization of three-phase structure**

The composite material sample strips were cooled to -50°C in liquid nitrogen and sliced. The micro-morphology of the composite material was characterized by Dimension type fast scanning atomic force microscope from Bruker company, Germany.

**17. Determination of the content ratio K of grafted units in the xylene insolubles and the modified flexible polypropylene insulating material**

A proper amount of the sample was taken, and accurately weighed, expressed as $m_p$. Xylene insolubles (IXS) and xylene solubles (XS) were separated, dried and weighed, expressed as $m_{ixs}$ and $m_{xs}$ respectively, according to the national standard method «Plastics-Determination of Content of Xylene-Soluble matter in polypropylene» specified in GB/T24282-2009.

The mass concentration of the grafted units in the xylene insolubles and the modified flexible polypropylene insulating material was measured and calculated by infrared spectroscopy according to the method described in the reference document (Wang Zhengxi, Sun Daotong, Cao Liqun, Application of the Standard Addition Method to Quantitative Infrared Analysis of Polymer [J], Plastic Industry, 1989, (6): 41-43). The references should be chosen to be polymers of grafting monomers, and part of sample references of grafting monomers and the infrared characteristic peaks thereof are exemplified as follows:

| | Reference | Infrared characteristic peak |
|---|---|---|
| styrene | polystyrene, Shanghai Secco GPPS-123 | A700 |
| methyl methacrylate | poly methyl methacrylate, Arkema, V825 | A1730 |
| vinyltriethoxysilane | polyvinyltriethoxysilane, self made in laboratory | A1082 |

If the grafting monomer includes maleic anhydride, the concentration of maleic anhydride in the xylene insolubles and the modified flexible polypropylene insulating material was determined and calculated according to the method described in the reference document (Zhang Guangping, Solid Phase Graft of Maleic Anhydride onto Polypropylene in Helical Ribbon Reactor, China Plastics, Vol. 16, No. 2, Feb., 2002, 69-71).

The concentrations of the grafted units in the xylene insolubles and the modified flexible polypropylene insulating material measured and calculated by infrared spectroscopy were expressed as $c_{ixs\ (1,\ 2,\ 3\ldots\ \ldots)}$ and $c_{p\ (1,\ 2,\ 3\ldots\ \ldots)}$ (1, 2, 3 denote different types of grafted units) respectively, and the calculation formula of the mass ratio K of the grafted units in the xylene insolubles and the modified flexible polypropylene insulating material is as follows:

$$K = \frac{m_{ixs} \times (c_{ixs,\ 1} + c_{ixs,\ 2} + c_{ixs,\ 3} \ldots\ldots)}{m_p \times (c_{p,\ 1} + c_{p,\ 2} + c_{p,\ 3} \ldots\ldots)}$$

Examples

Raw materials used in the examples and physical properties thereof are listed in Table A, Table B and Table C below.

Table A

| Name | Description |
|---|---|
| PP 1 * | Self made with a reference to the method described in CN110305400A |
| PP 2* | Self made with a reference to the method described in CN102453180A |
| PP 3* | Self made with a reference to the method described in CN102816269A |

(continued)

| Name | Description |
|---|---|
| b-PP 1* | Self made with a reference to the method described in CN101679557A |
| b-PP 2* | Self made with a reference to the method described in CN109153831A |
| b-PP 3* | Self made with a reference to the method described in CN101679557A |
| Dibenzoyl peroxide | J&K Chemicals |
| Lauroyl peroxide | J&K Chemicals |
| Tert-butyl peroxy (2-ethylhexanoate) | adamas-beta |
| Styrene | J&K Chemicals |
| Vinyltriethoxysilane | J&K Chemicals |
| Methyl methacrylate | J&K Chemicals |
| Polystyrene GPPS-123 | Shanghai Secco Petrochemical Co., Ltd. |
| Maleic anhydride | Sinopharm Chemical Reagent Co., Ltd |
| Styrene/maleic anhydride copolymer | Sigma-Aldrich LLC |
| *PP 1: Homo-polypropylene used in Examples 1A, 4A, 6A, 7A, Comparative Examples 1A, 5A, Examples 1B, 3B, 5B, Comparative Examples 1B, 5B.<br>*PP 2: Co-polypropylene used in Examples 2A, 3A, 8A, Comparative Examples 3, 4A, Examples 2B, 6B, 7B, Comparative Example 4B.<br>*PP 3: Co-polypropylene used in Example 5A, Example 4B.<br>*b-PP 1: Low-modulus polypropylene used in Examples 1A, 2A, 4A, 6A, 7A, 8A, Comparative Examples 3, 4A, 5A, Examples 1B, 3B, 5B, 7B, Comparative Examples 4B, 5B.<br>*b-PP 2: Low-modulus polypropylene used in Example 3A, Examples 2B, 6B.<br>*b-PP 3: Low-modulus polypropylene used in Example 5A, Example 4B. | |

Table B

| | MFR, g/10min | Tm, °C | Mw, g/mol | XS, wt% | Type of comonomer | Comonomer content, mol% | Flexural modulus, MPa |
|---|---|---|---|---|---|---|---|
| PP1 | 3.4 | 163.9 | 38.7E4 | 0.7 | None | 0 | 1630 |
| PP2 | 3.9 | 144.3 | 35.9E4 | 2.2 | 1-butene | 5.28 | 1030 |
| PP3 | 2.5 | 145.6 | 36.7E4 | 6.2 | ethylene | 3.26 | 980 |

Table C

| | MFR, g/lOmin | Tm, °C | Comonomer content, wt% | Mw, g/mol | XS, wt% | XSC2, wt% | Intrinsic viscosity ratio | Flexural modulus, MPa |
|---|---|---|---|---|---|---|---|---|
| b-PP1 | 1.2 | 143.4 | 18.1 | 34.3E4 | 46.8 | 31.9 | 0.89 | 190 |
| b-PP2 | 0.5 | 142.5 | 20.1 | 53.8E4 | 65.2 | 29.5 | 1.23 | 90 |
| b-PP3 | 1.0 | 133.6 | 20.3 | 36.6E4 | 51.2 | 29.8 | 0.58 | 160 |

**Example 1A**

2.0 kg of PP1 powder material was weighed, with fine powder smaller than 40 meshes being removed by

sieving, and added to a 10 L reaction kettle with a mechanical stirrer, the reaction system was sealed, and oxygen was removed by nitrogen replacement. 4.83 g tert-butyl peroxy (2-ethylhexanoate) and 322 g styrene were added, the reaction mixture was mixed with stirring for 30 min, 2 kg of a dispersant water was added, swelled at 50°C for 2 h, the reaction system was heated to 90°C, and reacted for 4 h. After the end of the reaction, the reaction product was cooled, filtered to remove the dispersant water, and dried under vacuum at 70°C for 10 h, to obtain polypropylene-g-styrene powder, $M_A$=7.2 %.

1.2 kg of polypropylene-g-styrene powder and b-PP1 were weighed according to the mass ratio of 36:64, 3000 ppm antioxidant 1010/168 (mass ratio of 1: 1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material C1A. The product obtained was tested for various performance parameters, and the results are shown in Table 1.

FIG. 1 is an atomic force microscope photograph (modulus image) of the material product of Example 1A in which the bright white regions represent the styrene grafted phase, the black regions represent the rubber phase, and other regions represent the continuous phase.

FIG. 2 is a photograph showing the microstructure of the material product of Example 1A under an electron microscope at 10000 times, in which the spherical dispersed phase is the styrene grafted phase. It can be seen that the particle size of the styrene grafted phase is small and the morphology is regular.

**Example 2A**

2.0 kg of PP2 powder material was weighed, with fine powder smaller than 40 meshes being removed by sieving, and added to a 10 L reaction kettle with a mechanical stirrer, the reaction system was sealed, and oxygen was removed by nitrogen replacement. 2.4 g dibenzoyl peroxide and 240 g styrene were added, the reaction mixture was mixed with stirring for 30 min, swelled at 40°C for 2 h, heated to 100°C, and reacted for 3 h. After the end of the reaction, the reaction product was cooled, and dried under vacuum at 70°C for 10 h, to obtain polypropylene-g-styrene powder, $M_A$=7.0 %.

1.2 kg of polypropylene-g-styrene powder and b-PP1 were weighed according to the mass ratio of 60:40, 3000 ppm antioxidant 1035 was added, and the resulting mixture was added into a high-speed stirrer for homogenizing. Granulation was carried out by a twin-screw extruder at the partition temperature of 190-200-210-220-220-220-220-220-210-200 °C and the screw speed of 450 rpm, to obtain the composite material C2A. The product obtained was tested for various performance parameters, and the results are shown in Table 1.

**Example 3A**

2.0 kg of PP2 powder material was weighed, with fine powder smaller than 40 meshes being removed by sieving, and added to a 10 L reaction kettle with a mechanical stirrer, the reaction system was sealed, and oxygen was removed by nitrogen replacement. 2.2 g dibenzoyl peroxide and 100 g methyl methacrylate were added, the reaction mixture was mixed with stirring for 20 min, heated to 95°C, and reacted for 5 h. After the end of the reaction, the reaction product was cooled, and dried under vacuum at 70 °C for 10 h, to obtain polypropylene-g-methyl methacrylate powder, $M_A$=2.5 %.

1.2 kg of polypropylene-g-methyl methacrylate powder and b-PP2 were weighed according to the mass ratio of 60:40, 3000 ppm antioxidant 1035 was added, and the resulting mixture was added into a high-speed stirrer for homogenizing. Granulation was carried out by a twin-screw extruder at the partition temperature of 200-210-220-230-230-230-230-220-220-210°C and the screw speed of 350 rpm, to obtain the composite material C3A. The product obtained was tested for various performance parameters, and the results are shown in Table 1.

FIG. 3 is a photograph showing the microstructure of the material product of Example 3A under an electron microscope at 10000 times, in which the spherical dispersed phase is the methyl methacrylate grafted phase. It can be seen that the particle size of the methyl methacrylate grafted phase is small and the morphology is regular.

**Example 4A**

2.0 kg of PP1 powder material was weighed, with fine powder smaller than 40 meshes being removed by sieving, and added to a 10 L reaction kettle with a mechanical stirrer, the reaction system was sealed, and oxygen was removed by nitrogen replacement. 3.4 g dibenzoyl peroxide and 226 g styrene were added, the reaction mixture was mixed with stirring for 30 min, 2 L of a dispersant deionized water was added, the reaction system was heated to 90°C, and reacted for 6 h. After the end of the reaction, the reaction product was cooled, and dried under vacuum at 70°C for 10 h, to obtain polypropylene-g-styrene powder 1, $M_A$=6.2 %.

2.0 kg of b-PP1 powder was weighed, and added to a 10 L reaction kettle with a mechanical stirrer, the reaction

system was sealed, and oxygen was removed by nitrogen replacement. 0.28 g dibenzoyl peroxide and 28.0 g styrene were added, the reaction mixture was mixed with stirring for 20 min, 2 L of a dispersant deionized water was added, the reaction system was heated to 90°C, and reacted for 5 h. After the end of the reaction, the reaction product was cooled, and dried under vacuum at 70 °C for 10 h, to obtain polypropylene-g-styrene powder 2, $M_B$=0.8 %.

1.2 kg of polypropylene-g-styrene powder 1 and polypropylene-g-styrene powder 2 were weighed according to the mass ratio of 36:64, 3000 ppm antioxidant 1010/168 (mass ratio of 1: 1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material C4A. The product obtained was tested for various performance parameters, and the results are shown in Table 1.

FIG. 4 is a photograph showing the microstructure of the material product of Example 4A under an electron microscope at 10000 times, in which the spherical dispersed phase is the styrene grafted phase. It can be seen that the particle size of the styrene grafted phase is small and the morphology is regular.

**Example 5A**

2.0 kg of PP3 powder material was weighed, with fine powder smaller than 40 meshes being removed by sieving, and added to a 10 L reaction kettle with a mechanical stirrer, the reaction system was sealed, and oxygen was removed by nitrogen replacement. 7.5 g of lauroyl peroxide, 150 g of vinyltriethoxysilane and 100 ml of xylene were mixed to homogeneity, added to the reaction kettle, the reaction mixture was mixed with stirring for 20 min, heated to 105°C, and reacted for 4 h. After the end of the reaction, the reaction product was cooled, and dried under vacuum at 70 °C for 10 h, to obtain polypropylene-g-vinyltriethoxysilane powder, $M_A$=1.8 %.

1.2 kg of polypropylene-g-vinyltriethoxysilane powder and b-PP3 were weighed according to the mass ratio of 40:60, 2000 ppm antioxidant 1024 was added, and the resulting mixture was added into a high-speed stirrer for homogenizing. Granulation was carried out by a twin-screw extruder at the partition temperature of 200-210-220-230-230-230-230-220-220-210 °C and the screw speed of 400 rpm, to obtain the composite material C5A. The product obtained was tested for various performance parameters, and the results are shown in Table 1.

FIG. 5 is a photograph showing the microstructure of the material product of Example 5A under an electron microscope at 10000 times, in which the spherical dispersed phase is the vinyltriethoxysilane grafted phase. It can be seen that the particle size of the vinyltriethoxysilane grafted phase is small and the morphology is regular.

**Example 6A**

2.0 kg of PP1 powder material was weighed, with fine powder smaller than 40 meshes being removed by sieving, and added to a 10 L reaction kettle with a mechanical stirrer, the reaction system was sealed, and oxygen was removed by nitrogen replacement. 4.83 g tert-butyl peroxy (2-ethylhexanoate) and 322 g styrene were added, without stirring, 2 kg of a dispersant water was added, without swelling, the reaction system was heated to 90°C, and reacted for 4 h. After the end of the reaction, the reaction product was cooled, filtered to remove the dispersant water, and dried under vacuum at 70°C for 10 h, to obtain polypropylene-g-styrene powder, $M_A$=3.4 %.

1.2 kg of polypropylene-g-styrene powder and b-PP1 were weighed according to the mass ratio of 36:64, 3000 ppm antioxidant 1010/168 (mass ratio of 1: 1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material C6A. The product obtained was tested for various performance parameters, and the results are shown in Table 1.

**Example** 7A

2.0 kg of PP1 powder material was weighed, with fine powder smaller than 40 meshes being removed by sieving, and added to a 10 L reaction kettle with a mechanical stirrer, the reaction system was sealed, and oxygen was removed by nitrogen replacement. 0.9 g dibenzoyl peroxide and 30 g styrene were added, the reaction mixture was mixed with stirring for 30 min, 2 L of a dispersant deionized water was added, the reaction system was heated to 90°C, and reacted for 6 h. After the end of the reaction, the reaction product was cooled, and dried under vacuum at 70°C for 10 h, to obtain polypropylene-g-styrene powder 1, $M_A$=0.6 %.

2.0 kg of b-PP1 powder was weighed, and added to a 10 L reaction kettle with a mechanical stirrer, the reaction system was sealed, and oxygen was removed by nitrogen replacement. 3.5 g dibenzoyl peroxide and 141 g styrene were added, the reaction mixture was mixed with stirring for 20 min, 2 L of a dispersant deionized water was added, the reaction system was heated to 90°C, and reacted for 5 h. After the end of the reaction, the reaction product was cooled, and dried under vacuum at 70 °C for 10 h, to obtain polypropylene-g-styrene powder 2, $M_B$=4.1 %.

1.2 kg of polypropylene-g-styrene powder 1 and polypropylene-g-styrene powder 2 were weighed according to the mass ratio of 36:64, 3000 ppm antioxidant 1010/168 (mass ratio of 1: 1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material C7A. The product obtained was tested for various performance parameters, and the results are shown in Table 1.

**Example 8A**

2.0 kg of PP2 powder material was weighed, with fine powder smaller than 40 meshes being removed by sieving, and added to a 10 L reaction kettle with a mechanical stirrer, the reaction system was sealed, and oxygen was removed by nitrogen replacement. 3.1 g dibenzoyl peroxide and 174 g styrene were added, the reaction mixture was mixed with stirring for 30 min, 2 L deionized water was added, swelled at 40°C for 2 h, the reaction system was heated to 90°C, and reacted for 6 h. After the end of the reaction, the reaction product was cooled, and dried under vacuum at 70°C for 10 h, to obtain polypropylene-g-styrene powder, $M_A$=3.6 %.

1.2 kg of polypropylene-g-styrene powder and b-PP1 were weighed according to the mass ratio of 50:50, 3000 ppm antioxidant 1035 was added, and the resulting mixture was added into a high-speed stirrer for homogenizing. Granulation was carried out by a twin-screw extruder at the partition temperature of 190-200-210-220-220-220-220-220-210-200 °C and the screw speed of 450 rpm, to obtain the composite material C8A. The product obtained was tested for various performance parameters, and the results are shown in Table 1.

**Comparative Example 1A**

2.0 kg of PP1 powder material was weighed, with fine powder smaller than 40 meshes being removed by sieving, and added to a 10 L reaction kettle with a mechanical stirrer, the reaction system was sealed, and oxygen was removed by nitrogen replacement. 2 g of dibenzoyl peroxide and 100 g of styrene were added, the reaction mixture was mixed with stirring for 60 min, swelled at 40°C for 4 h, the reaction system was heated to 95°C, and reacted for 4 h. After the end of the reaction, the reaction product was cooled by nitrogen purging, to obtain polypropylene-g-styrene powder.

1.2 kg of polypropylene-g-styrene powder was weighed, 3000 ppm antioxidant 1010/168 (mass ratio of 1:1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the product D1A. The product obtained was tested for various performance parameters, and the results are shown in Table 1.

**Comparative Example 2**

A polypropylene powder with the following characteristics was selected: the comonomer ethylene content is 20.2 mol%, the content of xylene solubles is 44.2 wt%, the weight average molecular weight is 35.3 $\times$ $10^4$ g/mol, the MFR under the load of 2.16 kg at 230°C is 1.55 g/10min, Tm=143.6°C. 1.2 kg of the above polypropylene powder was weighed, 3000 ppm antioxidant 1010/168 (mass ratio of 1:1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the product D2. The product obtained was tested for various performance parameters, and the results are shown in Table 1.

**Comparative Example 3**

1.2 kg of PP2 powder and b-PP1 were weighed according to the mass ratio of 50:50, 3000 ppm antioxidant 1035 was added, and the resulting mixture was added into a high-speed stirrer for homogenizing. Granulation was carried out by a twin-screw extruder at the partition temperature of 190-200-210-220-220-220-220-220-210-200 °C and the screw speed of 450 rpm, to obtain the composite material D3. The product obtained was tested for various performance parameters, and the results are shown in Table 1.

FIG. 6 is a photograph showing the microstructure of the product of Comparative Example 3 under an electron microscope at 10000 times. FIG. 7 is a photograph showing the microstructure of the product of Comparative Example 3 after etching under an electron microscope at 10000 times, wherein the black portions are the rubber phase. It can be seen from FIG. 6 and FIG. 7 that the ungrafted product includes the rubber phase, but does not contain the grafted phase. The product of the invention after grafting is a three-phase structure including both the rubber phase and the grafted phase.

### Comparative Example 4A

2.0 kg of PP2 powder material was weighed, with fine powder smaller than 40 meshes being removed by sieving, and added to a 10 L reaction kettle with a mechanical stirrer, the reaction system was sealed, and oxygen was removed by nitrogen replacement. 10 g dibenzoyl peroxide and 566.7 g styrene were added, the reaction mixture was mixed with stirring for 30 min, 2 L deionized water was added, swelled at 40°C for 2 h, the reaction system was heated to 90°C, and reacted for 6 h. After the end of the reaction, the reaction product was cooled, and dried under vacuum at 70°C for 10 h, to obtain polypropylene-g-styrene powder, $M_A$=12.7 %.

1.2 kg of polypropylene-g-styrene powder and b-PP1 were weighed according to the mass ratio of 50:50, 3000 ppm antioxidant 1035 was added, and the resulting mixture was added into a high-speed stirrer for homogenizing. Granulation was carried out by a twin-screw extruder at the partition temperature of 190-200-210-220-220-220-220-220-210-200 °C and the screw speed of 450 rpm, to obtain the composite material D4A. The product obtained was tested for various performance parameters, and the results are shown in Table 1.

FIG. 8 is a photograph showing the microstructure of the product of Comparative Example 4A under an electron microscope at 10000 times.

### Comparative Example 5A

1.2 kg of PP1, b-PP1, poly styrene GPPS-123 were weighed according to the mass ratio of 31:64:5, 3000 ppm antioxidant 1010/168 (mass ratio of 1: 1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material D5A. The product obtained was tested for various performance parameters, and the results are shown in Table 1.

FIG. 9 is a photograph showing the microstructure of the product of Comparative Example 5A under an electron microscope at 10000 times. Due to poor compatibility, the size of the dispersed phase is not uniform, and there are obvious large-sized dispersed phases.

Table 1

| | MFR g/ 10min | Content of xylene solubles wt% | M1 wt% | D50 nm | K value | Tensile strength MPa | Elongation at break % | Flexural modulus MPa | Breakdown field strength $E_g$ (110°C) kV/mm | $\rho_{vg}$ (110°C, 40 kV/mm) Ω·m | Dielectric constant (50 Hz, 110°C) |
|---|---|---|---|---|---|---|---|---|---|---|---|
| C1A | 2.4 | 32.6 | 2.6 | 179 | 0.52 | 18.3 | >300 | 450 | 370 | 1.9E+13 | 2.2 |
| C2A | 1.9 | 19.7 | 4.2 | 171 | 0.66 | 16.0 | >300 | 520 | 316 | 4.0E+13 | 2.3 |
| C3A | 3.3 | 29.1 | 1.5 | 107 | 0.76 | 14.8 | >300 | 480 | 322 | 5.2E+13 | 2.3 |
| C4A | 0.9 | 33.0 | 2.7 | 185 | 0.50 | 19.0 | >300 | 440 | 350 | 2.9E+13 | 2.2 |
| C5A | 1.4 | 32.3 | 0.7 | 137 | 0.80 | 12.4 | >300 | 380 | 304 | 1.4E+13 | 2.2 |
| C6A | 2.4 | 34.2 | 1.2 | 234 | 0.25 | 18.3 | >300 | 450 | 298 | 1.1E+13 | 2.2 |
| C7A | 0.8 | 36.4 | 2.8 | 264 | 0.16 | 18.7 | >300 | 450 | 295 | 1.3E+13 | 2.2 |
| C8A | 1.8 | 27.5 | 1.8 | 192 | 0.47 | 15.9 | >300 | 530 | 310 | 3.2E+13 | 2.3 |
| D1A | 2.4 | 1.2 | 2.1 | 133 | - | 36.8 | >300 | 1770 | 459 | 1.1E+13 | 2.2 |
| D2 | 1.6 | 44.2 | 0.0 | 0 | - | 14.8 | >300 | 450 | 227 | 7.7E+12 | 2.3 |
| D3 | 2.3 | 25.1 | 0.0 | 0 | - | 15.7 | >300 | 530 | 284 | 8.6E+12 | 2.2 |
| D4A | 2.1 | 27.4 | 6.4 | 376 | 0.63 | 19.7 | >300 | 650 | 279 | 1.0E+13 | 2.3 |
| DSA | 1.4 | 36.1 | 0.0 | 323 | - | 18.3 | >300 | 490 | 275 | 9.3E+12 | 2.2 |

By comparing the data of Example 1A and Comparative Example 1A, it can be seen that the use of homo-PP as the base powder results in a polypropylene-g-styrene material product having too high flexural modulus and poor mechanical properties, which cannot meet the processing and use requirements of insulating materials.

By comparing the data of Example 1A and Comparative Example 2, it can be seen that the mechanical properties of the product obtained in the invention are not lower than those of the polypropylene prepared by directly alloying in a kettle, and the electrical properties are more advantageous.

By comparing the data of Example 8A and Comparative Example 3, it can be seen that, as compared with the material without the grafted phase, the mechanical properties of the modified flexible polypropylene insulating material are almost the same, and the breakdown field strength and the direct current volume resistivity are both improved, indicating that the modified flexible polypropylene insulating material of the invention has good electrical properties.

By comparing the data of Example 8A and Comparative Example 4A, it can be seen that, when the grafting amount exceeds the limited range, not only the D50 of the grafted phase is too large, which causes a reduction of the breakdown field strength and the volume resistivity of the modified flexible polypropylene insulating material, affecting the electrical properties of the material, but also the flexural modulus of the modified flexible polypropylene insulating material becomes large, which is not favorable for the practical use requirements.

By comparing the data of Example 1A and Comparative Example 5A, it can be seen that, when blending the polymer of alkenyl-containing functional monomer, the size of the dispersed phase of the alkenyl-containing functional monomer becomes too large, which causes a great reduction of the breakdown field strength and the volume resistivity of the material, greatly affecting the electrical properties of the material.

By comparing the data of Example 1A and Examples 6A, 7A, it can be seen that, either by pre-contacting the reaction mixture, or by adjusting the content of grafted units in different polypropylene components, it is possible to increase the proportion of grafted units in the insolubles, resulting in better electrical properties.

In conclusion, as can be seen from the data in Table 1, the modified flexible polypropylene insulating material obtained in the invention not only has excellent electrical insulating properties, but also has good mechanical properties and processability.

Furthermore, it can be seen from the dielectric constant data that the material of the invention satisfies the necessary conditions for insulation.

### Example 1B

2.0 kg of PP1 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 3.95 g tert-butyl peroxy (2-ethylhexanoate) and 30 g maleic anhydride and 120 g styrene was added, mixed with stirring for 30 min, 2 kg of a dispersant water was added, swelled at 50°C for 2, the reaction system was heated to 90°C, and reacted for 4 h. After the end of the reaction, the reaction product was cooled, filtered to remove the dispersant water, and dried under vacuum at 70 °C for 10 h, to obtain polypropylene-g-styrene/maleic anhydride powder, $M_A$=4.9 %.

1.2 kg of polypropylene-g-styrene/maleic anhydride powder and b-PP1 were weighed according to the mass ratio of 36:64, 3000 ppm antioxidant 1010/168 (mass ratio of 1:1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material C1B. The product obtained was tested for various performance parameters, and the results are shown in Table 1.

FIG. 10 is an atomic force microscope photograph (Log modulus mode) of the material product of Example 1B in which the white regions represent the styrene/maleic anhydride grafted phase, the black regions represent the rubber phase, and other regions represent the continuous phase.

FIG. 11 is a photograph showing the microstructure of the material product of Example 1B under an electron microscope at 20000 times, in which the spherical dispersed phase is the styrene/maleic anhydride grafted phase. It can be seen that the particle size of the styrene/maleic anhydride grafted phase is small and the morphology is regular.

### Example 2B

2.0 kg of PP2 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 1.5 g dibenzoyl peroxide and 13 g maleic anhydride and 39 g styrene was added, mixed with stirring for 30 min, swelled at 40°C for 2 h, the reaction system was heated to 100°C, and reacted for 3 h. After the end of the reaction, the reaction product was cooled, and dried under vacuum at 70°C for 10 h, to obtain polypropylene-g-styrene/maleic anhydride powder, $M_A$=1.4 %.

1.2 kg of polypropylene-g-styrene/maleic anhydride powder and b-PP2 were weighed according to the mass

ratio of 60:40, 3000 ppm antioxidant 1035 was added, and the resulting mixture was added into a high-speed stirrer for homogenizing. Granulation was carried out by a twin-screw extruder at the partition temperature of 190-200-210-220-220-220-220-220-210-200 °C and the screw speed of 450 rpm, to obtain the composite material C2B. The product obtained was tested for various performance parameters, and the results are shown in Table 2. FIG. 12 is a photograph showing the microstructure of the material product of Example 2B under an electron microscope at 20000 times, in which the spherical dispersed phase is the styrene/maleic anhydride grafted phase. It can be seen that the particle size of the styrene/maleic anhydride grafted phase is small and the morphology is regular.

**Example 3B**

2.0 kg of PP1 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 3.95 g tert-butyl peroxy (2-ethylhexanoate) and 30 g maleic anhydride and 120 g styrene was added, mixed with stirring for 30 min, 2 kg of a dispersant water was added, swelled at 50°C for 2 h, the reaction system was heated to 90°C, and reacted for 4 h. After the end of the reaction, the reaction product was cooled, filtered to remove the dispersant water, and dried under vacuum at 70 °C for 10 h, to obtain polypropylene-g-styrene/maleic anhydride powder, $M_A$=4.9 %.

2.0 kg of b-PP1 powder was weighed, and added to a 10 L reaction kettle with a mechanical stirrer, the reaction system was sealed, and oxygen was removed by nitrogen replacement. A mixture of 0.28 g dibenzoyl peroxide and 64.0 g styrene was added, mixed with stirring for 20 min, 2 L of a dispersant deionized water was added, the reaction system was heated to 90°C, and reacted for 5 h. After the end of the reaction, the reaction product was cooled, and dried under vacuum at 70°C for 10 h, to obtain polypropylene-g-styrene powder, $M_B$=1.1 %.

1.2 kg of polypropylene-g-styrene/maleic anhydride powder and polypropylene-g-styrene powder were weighed according to the mass ratio of 38:62, 3000 ppm antioxidant 1010/168 (mass ratio of 1:1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material C3B. The product obtained was tested for various performance parameters, and the results are shown in Table 2.

FIG. 13 is a photograph showing the microstructure of the material product of Example 3B under an electron microscope at 20000 times, in which the spherical dispersed phase is the styrene/maleic anhydride grafted phase. It can be seen that the particle size of the styrene/maleic anhydride grafted phase is small and the morphology is regular.

**Example 4B**

2.0 kg of PP3 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 3.5 g lauroyl peroxide and 30 g maleic anhydride and 32 g α-methylstyrene was mixed with stirring for 30 min, 2 L of a dispersant deionized water was added, the reaction system was heated to 90°C, and reacted for 6 h. After the end of the reaction, the reaction product was cooled, and dried under vacuum at 70 °C for 10 h, to obtain polypropylene-g-α-methylstyrene/maleic anhydride powder, $M_A$=0.9 %.

1.2 kg of polypropylene-g-α-methylstyrene/maleic anhydride powder and b-PP3 were weighed according to the mass ratio of 41:59, 2000 ppm antioxidant 1024 was added, and the resulting mixture was added into a high-speed stirrer for homogenizing. Granulation was carried out by a twin-screw extruder at the partition temperature of 200-210-220-230-230-230-230-220-220-210°C and the screw speed of 400 rpm, to obtain the composite material C4B. The product obtained was tested for various performance parameters, and the results are shown in Table 2.

**Example 5B**

2.0 kg of PP1 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 1.8 g dibenzoyl peroxide and 120.5 g methyl methacrylate was added, mixed with stirring for 30 min, 2 L of a dispersant deionized water was added, the reaction system was heated to 90°C, and reacted for 2.5 h. After the end of the reaction, the reaction product was cooled, and dried under vacuum at 70°C for 10 h, to obtain polypropylene-g-methyl methacrylate powder, $M_A$=4.6 %.

2.0 kg of b-PP1 powder was weighed, and added to a 10 L reaction kettle with a mechanical stirrer, the reaction system was sealed, and oxygen was removed by nitrogen replacement. A mixture of 0.29 g dibenzoyl peroxide and 14.3 g maleic anhydride and 85.7 g styrene was added, mixed with stirring for 20 min, the reaction system was heated to 90°C, and reacted for 5 h. After the end of the reaction, the reaction product was cooled, and dried under vacuum at

70°C for 10 h, to obtain polypropylene-g-styrene/maleic anhydride powder, $M_B$=2.6 %.

1.2 kg of polypropylene-g-methyl methacrylate powder and polypropylene-g-styrene/maleic anhydride powder were weighed according to the mass ratio of 38:62, 3000 ppm antioxidant 1010/168 (mass ratio of 1:1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material C5B. The product obtained was tested for various performance parameters, and the results are shown in Table 2.

**Example 6B**

2.0 kg of PP2 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 1.5 g dibenzoyl peroxide and 13 g maleic anhydride and 39 g styrene was added, mixed with stirring for 30 min, swelled at 40°C for 2 h, the reaction system was heated to 100°C, and reacted for 3 h. After the end of the reaction, the reaction product was cooled, and dried under vacuum at 70°C for 10 h, to obtain polypropylene-g-styrene/maleic anhydride powder, $M_A$=1.4 %.

2.0 kg of b-PP2 powder was weighed, and added to a 10 L reaction kettle with a mechanical stirrer, the reaction system was sealed, and oxygen was removed by nitrogen replacement. A mixture of 0.6 g dibenzoyl peroxide and 8.4 g maleic anhydride and 31.5 g styrene was added, mixed with stirring for 20 min, 2 L of a dispersant deionized water was added, the reaction system was heated to 90°C, and reacted for 5 h. After the end of the reaction, the reaction product was cooled, and dried under vacuum at 70°C for 10 h, to obtain polypropylene-g-styrene/maleic anhydride powder 2, $M_B$=1.3 %.

1.2 kg of polypropylene-g-styrene/maleic anhydride powder 1 and polypropylene-g-styrene/maleic anhydride powder 2 were weighed according to the mass ratio of 60:40, 3000 ppm antioxidant 1035 was added, and the resulting mixture was added into a high-speed stirrer for homogenizing. Granulation was carried out by a twin-screw extruder at the partition temperature of 190-200-210-220-220-220-220-220-210-200 °C and the screw speed of 450 rpm, to obtain the composite material C6B. The product obtained was tested for various performance parameters, and the results are shown in Table 2.

**Example 7B**

2.0 kg of PP2 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 1.7 g dibenzoyl peroxide and 17 g maleic anhydride and 68 g styrene was added, mixed with stirring for 30 min, 2 L deionized water was added, swelled at 40°C for 2 h, the reaction system was heated to 90°C, and reacted for 6 h. After the end of the reaction, the reaction product was cooled, and dried under vacuum at 70°C for 10 h, to obtain polypropylene-g-styrene/maleic anhydride powder, $M_A$=2.2 %.

1.2 kg of polypropylene-g-styrene/maleic anhydride powder and b-PP1 were weighed according to the mass ratio of 50:50, 3000 ppm antioxidant 1035 was added, and the resulting mixture was added into a high-speed stirrer for homogenizing. Granulation was carried out by a twin-screw extruder at the partition temperature of 190-200-210-220-220-220-220-220-210-200 °C and the screw speed of 450 rpm, to obtain the composite material C7B. The product obtained was tested for various performance parameters, and the results are shown in Table 2.

**Comparative Example 1B**

2.0 kg of PP1 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 1 g dibenzoyl peroxide and 10 g maleic anhydride and 40 g styrene was added, mixed with stirring for 30 min, swelled at 40°C for 4 h, the reaction system was heated to 95°C, and reacted for 4 h. After the end of the reaction, the reaction product was cooled by nitrogen purging, to obtain polypropylene-g-styrene/maleic anhydride powder.

1.2 kg of polypropylene-g-styrene/maleic anhydride powder was weighed, 3000 ppm antioxidant 1010/168 (mass ratio of 1:1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the product D1B. The product obtained was tested for various performance parameters, and the results are shown in Table 2.

**Comparative Example 4B**

2.0 kg of PP2 powder material was weighed, with fine powder smaller than 40 meshes being removed by sieving, and added to a 10 L reaction kettle with a mechanical stirrer, the reaction system was sealed, and oxygen was removed by nitrogen replacement. A mixture of 10 g dibenzoyl peroxide and 100 g maleic anhydride and 400 g styrene was added, mixed with stirring for 30 min, 2 L deionized water was added, swelled at 40°C for 2 h, the reaction system was heated to 90°C, and reacted for 6 h. After the end of the reaction, the reaction product was cooled, and dried under vacuum at 70°C for 10 h, to obtain polypropylene-g-styrene/maleic anhydride powder, $M_A$=13.4%.

1.2 kg of polypropylene-g-styrene/maleic anhydride powder and b-PP1 were weighed according to the mass ratio of 50:50, 3000 ppm antioxidant 1035 was added, and the resulting mixture was added into a high-speed stirrer for homogenizing. Granulation was carried out by a twin-screw extruder at the partition temperature of 190-200-210-220-220-220-220-220-210-200 °C and the screw speed of 450 rpm, to obtain the composite material D4B. The product obtained was tested for various performance parameters, and the results are shown in Table 2. FIG. 14 is a photograph showing the microstructure of the product of Comparative Example 4B under an electron microscope at 20000 times.

**Comparative Example 5B**

1.2 kg of PP1, b-PP1, styrene/maleic anhydride polymer were weighed according to the mass ratio of 31:64:5, 3000 ppm antioxidant 1010/168 (mass ratio of 1:1) was added, and the resulting mixture was added into a high-speed stirrer for homogenizing. Granulation was carried out by a twin-screw extruder at the partition temperature of 190-200-210-220-220-220-220-220-210-200 °C and the screw speed of 400 rpm, to obtain the composite material D5B. The product obtained was tested for various performance parameters, and the results are shown in Table 2.

FIG. 15 is a photograph showing the microstructure of the product of Comparative Example 5B under an electron microscope at 20000 times. Due to poor compatibility, the size of the dispersed phase is not uniform, and there are obvious large-sized dispersed phases.

Table 2

| | MFR g/ 10min | Content of xylene solubles wt% | M1 wt% | M2 wt% | D50 nm | K value | Tensile strength MPa | Elongation at break % | Flexural modulus MPa | Breakdown field strength $E_g$ (110°C) kV/mm | Pvg (110°C, 40 kV/mm) Ω·m | Dielectric constant (50 Hz, 110°C) |
|---|---|---|---|---|---|---|---|---|---|---|---|---|
| C1B | 1.5 | 32.5 | 1.8 | 0.4 | 104 | 0.85 | 18.0 | >300 | 430 | 327 | 7.4E+13 | 2.3 |
| C2B | 2.3 | 27.8 | 0.8 | 0.2 | 66 | 0.82 | 15.9 | >300 | 550 | 322 | 4.8E+13 | 2.4 |
| C3B | 1.2 | 31.6 | 2.5 | 0.3 | 99 | 0.58 | 18.2 | >300 | 450 | 310 | 5.1E+13 | 2.3 |
| C4B | 2.4 | 43.1 | 0.4 | 0.1 | 50 | 0.79 | 12.3 | >300 | 360 | 297 | 3.3E+13 | 2.3 |
| C5B | 1.4 | 33.4 | 3.4 | 0.2 | 119 | 0.57 | 18.9 | >300 | 490 | 289 | 3.8E+13 | 2.3 |
| C6B | 2.2 | 29.6 | 1.4 | 0.3 | 85 | 0.52 | 16.8 | >300 | 520 | 324 | 5.6E+13 | 2.3 |
| C7B | 2.2 | 25.2 | 1.1 | 0.2 | 84 | 0.60 | 15.9 | >300 | 530 | 304 | 4.1E+13 | 2.3 |
| D1B | 1.9 | 1.5 | 1.4 | 0.4 | 45 | - | 36.1 | >300 | 1570 | 419 | 9.2E+13 | 2.2 |
| D2 | 1.6 | 44.2 | 0.0 | 0.0 | 0 | - | 14.8 | >300 | 450 | 227 | 7.7E+12 | 2.3 |
| D3 | 2.3 | 25.1 | 0.0 | 0.0 | 0 | - | 15.7 | >300 | 530 | 284 | 8.6E+12 | 2.2 |
| D4B | 2.4 | 24.4 | 6.7 | 1.3 | 175 | 0.75 | 16.5 | >300 | 540 | 214 | 2.1E+14 | 2.4 |
| D5B | 2.2 | 31.2 | 0.0 | 0.0 | 187 | - | 17.3 | >300 | 430 | 210 | 6.9E+12 | 2.2 |

By comparing the data of Example 1B and Comparative Example 1B, it can be seen that the use of homo-PP as the base powder results in a polypropylene-g-styrene/maleic anhyride material product having too high flexural modulus and poor mechanical properties, which cannot meet the processing and use requirements of insulating materials.

By comparing the data of Example 1B and Comparative Example 2, it can be seen that the mechanical properties of the product obtained in the invention are not lower than those of the polypropylene prepared by directly alloying in a kettle, and the electrical properties are more advantageous.

By comparing the data of Example 7B and Comparative Example 3, it can be seen that, as compared with the material without the grafted phase, the mechanical properties of the modified flexible polypropylene insulating material are almost the same, and the breakdown field strength and the direct current volume resistivity are both improved, indicating that the modified flexible polypropylene insulating material of the invention has good electrical properties.

By comparing the data of Example 7B and Comparative Example 4B, it can be seen that, when the amount of the grafting monomer added is too high (M1 value is too high), the D50 of the grafted phase is too large, which causes a great reduction of the breakdown field strength of the modified flexible polypropylene insulating material, failing to meet the practical use requirements.

By comparing the data of Example 1B and Comparative Example 5B, it can be seen that, when blending the copolymer of anhydride/alkenyl-containing functional monomer, the size of the dispersed phase becomes too large and the dispersion is not uniform, which causes a great reduction of the breakdown field strength and the volume resistivity of the material, greatly affecting the electrical properties of the material.

In conclusion, as can be seen from the data in Table 2, the modified flexible polypropylene insulating material obtained in the invention not only has excellent electrical insulating properties, but also has good mechanical properties.

Furthermore, it can be seen from the dielectric constant data that the material of the invention satisfies the necessary conditions for insulation.

The examples of the invention have been described above, the above description is exemplary, not exhaustive, and the invention is not limited to the examples. Without departing from the scope and spirit of the examples, many modifications and changes are obvious to those of ordinary skill in the art.

The endpoints of ranges and any values disclosed herein are not to be limited to the precise ranges or values, which are to be understood to encompass values close to those ranges or values. For numerical ranges, the endpoints of each range, the endpoints of each range and the individual point values, as well as the individual point values may be combined with each other to yield one or more new numerical ranges, which numerical ranges should be deemed to be specifically disclosed herein.

## Claims

1. A modified flexible polypropylene insulating material comprising a propylene-based continuous phase, and a rubber phase and a grafted phase derived from an unsaturated bond-containing polymerizable monomer dispersed in the propylene-based continuous phase; wherein, the modified flexible polypropylene insulating material has a content of xylene solubles of 10-55 wt%, preferably 15-45 wt%, more preferably 18-40 wt%, and still more preferably 20-40 wt%, based on the total weight of the modified flexible polypropylene insulating material; the content of structural units derived from the unsaturated bond-containing polymerizable monomer and in a grafted state in the modified flexible polypropylene insulating material is 0.3-6 wt%, and preferably 0.7-5 wt%; the flexural modulus of the modified flexible polypropylene insulating material is 200-1000 MPa, preferably 200-950 MPa, more preferably 200-700 MPa, and still more preferably 250-600 MPa; preferably, the ratio of the mass of the structural units derived from the unsaturated bond-containing polymerizable monomer in xylene insolubles to the mass of the structural units derived from the unsaturated bond-containing polymerizable monomer in the modified flexible polypropylene insulating material is more than 0.1, preferably 0.3-0.9.

2. The modified flexible polypropylene insulating material according to claim 1, wherein the unsaturated bond-containing polymerizable monomer is an alkenyl-containing functional monomer; the content of structural units derived from the alkenyl-containing functional monomer and in a grafted state in the modified flexible polypropylene insulating material is 0.4-6 wt%, and preferably 1-5 wt%; the D50 of the grafted phase is less than 300 nm, preferably 10-250 nm, and more preferably 50-200 nm.

3. The modified flexible polypropylene insulating material according to claim 1, wherein the unsaturated bond-containing polymerizable monomer is an anhydride monomer and an alkenyl-containing functional monomer; the content of structural units derived from the anhydride monomer and the alkenyl-containing functional monomer and in a grafted state in the modified flexible polypropylene insulating material is 0.3-5 wt%, preferably 0.7-3 wt%, and the content of structural units derived from the anhydride monomer and in a grafted state is 0.05-2 wt%, preferably 0.2-0.5 wt%;

the D50 of the grafted phase is less than 170 nm, preferably 10-150 nm, and more preferably 55-110 nm.

**4.** The modified flexible polypropylene insulating material according to any of claims 1-3, wherein the modified flexible polypropylene insulating material has at least one of the following characteristics: the melt flow rate under the load of 2.16 kg at 230°C is 0.5-15 g/10 min, preferably 0.6-10 g/10 min, and further preferably 0.8-6 g/10 min; the elongation at break is ≥ 200%, and preferably ≥ 300%; the tensile strength is more than 5 MPa, preferably 10-25 MPa.

**5.** The modified flexible polypropylene insulating material according to any of claims 1-3, wherein the modified flexible polypropylene insulating material has at least one of the following characteristics:

- the maximum working temperature of the modified flexible polypropylene insulating material is ≥ 90°C, preferably 100-160°C, and more preferably 110-140°C;
- the breakdown field strength $E_g$ at 110 °C of the modified flexible polypropylene insulating material is ≥ 285 kV/mm, preferably 290-800 kV/mm, and more preferably 300-750 kV/mm;
- the direct current volume resistivity $\rho_{vg}$ at 110°C and 40 kV/mm field strength of the modified flexible polypropylene insulating material is ≥ $1.0\times10^{13}$ Q.m, preferably $1.5\times10^{13}$ Ω.m -$1.0\times10^{20}$Ω.m;
- the dielectric constant at 110°C and 50 Hz of the modified flexible polypropylene insulating material is greater than 2.0, and preferably 2.1-2.5.

**6.** The modified flexible polypropylene insulating material according to claim 3, wherein the anhydride monomer may be selected from anhydrides having at least one olefinic unsaturation; preferably, the anhydride monomer is selected from maleic anhydride and/or itaconic anhydride; further preferably, the anhydride monomer is maleic anhydride.

**7.** The modified flexible polypropylene insulating material according to claim 2 or 3, wherein the alkenyl-containing functional monomer is selected from at least one of monomers having a structure represented by the formula 1,

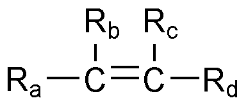 formula 1

in the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl.

**8.** The modified flexible polypropylene insulating material according to claim 7, wherein $R_b$, $R_c$, $R_d$ are each independently selected from H, substituted or unsubstituted $C_1$-$C_6$ alkyl; preferably $R_b$, $R_c$, $R_d$ are each independently selected from H, substituted or unsubstituted $C_1$-$C_3$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano, substituted or unsubstituted $C_3$-$C_{20}$ silyl; the substituent group is halogen, hydroxy, amino, $C_1$-$C_{12}$ alkyl, $C_3$-$C_6$ cycloalkyl, $C_1$-$C_{12}$ alkoxy, $C_1$-$C_{12}$ acyloxy; preferably, $R_a$ is selected from substituted or unsubstituted $C_1$-$C_{12}$ alkyl, substituted or unsubstituted $C_1$-$C_{18}$ alkoxy, substituted or unsubstituted $C_6$-$C_{12}$ aryl, substituted or unsubstituted $C_1$-$C_{12}$ ester group, substituted or unsubstituted $C_1$-$C_{12}$ carboxyl, substituted or unsubstituted $C_3$-$C_{12}$ cycloalkyl or heterocyclyl, cyano; the substituent group is halogen, $C_1$-$C_6$ alkyl, $C_3$-$C_6$ cycloalkyl; more preferably, $R_a$ is selected from substituted or unsubstituted $C_1$-$C_6$ alkyl, substituted or unsubstituted $C_1$-$C_{12}$ alkoxy, substituted or unsubstituted $C_6$-$C_8$ aryl, substituted or unsubstituted $C_1$-$C_6$ ester group, substituted or unsubstituted $C_1$-$C_6$ carboxyl, substituted or unsubstituted $C_3$-$C_6$ cycloalkyl or heterocyclyl, cyano.

**9.** The modified flexible polypropylene insulating material according to claim 8, wherein $R_b$, $R_c$, $R_d$ are each independently selected from H, substituted or unsubstituted $C_1$-$C_6$ alkyl;

$R_a$ is selected from a group represented by formula 2, a group represented by formula 3, a group represented by formula 4, a group represented by formula 5, a group represented by formula 6, a combination of a group represented by formula 6 and a group represented by formula 7, a heterocyclic group;

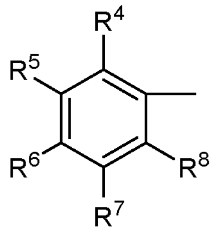

formula 2

in the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amino, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amino; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

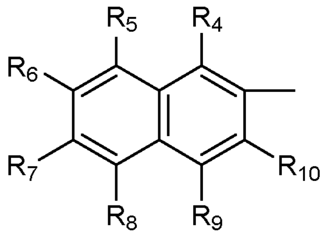

formula 3

in the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amino, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amino; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

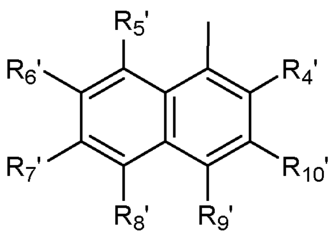

formula 4

in the formula 4, $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amino, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amino; preferably, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

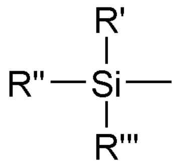
formula 5

in the formula 5, R', R'', R''' are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;

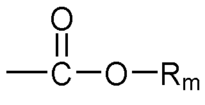
formula 6
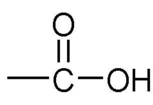
formula 7

in the formula 6, $R_m$ is selected from the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is selected from at least one of halogen, amino and hydroxy;

the heterocyclic group is selected from imidazolyl, pyrazolyl, carbazolyl, pyrrolidinonyl, pyridyl, piperidinyl, caprolactanyl, pyrazinyl, thiazolyl, purinyl, morpholinyl, oxazolinyl.

**10.** The modified flexible polypropylene insulating material according to claim 9, wherein the alkenyl-containing functional monomer is an aromatic olefin monomer, the aromatic olefin monomer is selected from at least one of styrene, α-methylstyrene, 1-vinyl naphthalene, 2-vinyl naphthalene, mono- or polysubstituted styrene, mono- or polysubstituted α-methylstyrene, mono- or polysubstituted 1-vinyl naphthalene and mono- or polysubstituted 2-vinyl naphthalene; the substituent group preferably is selected from at least one of halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, Ci-Cs linear amine group and $C_3$-$C_8$ branched amine group or cyclic amine group; preferably, the aromatic olefin monomer is selected from at least one of styrene, α-methylstyrene, 2-methylstyrene, 3-methylstyrene and 4-methylstyrene; and/or

the alkenyl-containing functional monomer is an alkenyl-containing silane monomer, the alkenyl-containing silane monomer selected from at least one of vinyltriethoxysilane, vinyltrimethoxysilane, vinyltriisopropoxysilane, vinyltri-tert-butoxysilane, vinyltriacetoxysilane, methylvinyldimethoxysilane, ethylvinyldiethoxysilane, allyltriethoxysilane, allyltrimethoxysilane, allyltriisopropoxysilane, vinyltris(β-methoxyethoxy)silane, allyltris(β-methoxyethoxy)silane, allyltri-tert-butoxysilane, allyltriacetoxysilane, methylallyldimethoxysilane and ethylallyldiethoxysilane; and/or

the alkenyl-containing functional monomer is an acrylate monomer and an optional acrylic monomer, preferably, the acrylate monomer is selected from at least one of methyl (methyl)acrylate, sec-butyl (methyl)acrylate, ethyl (methyl)acrylate, n-butyl (methyl)acrylate, isobutyl (methyl)acrylate, tert-butyl (methyl)acrylate, isooctyl (methyl)acrylate, dodecyl (methyl)acrylate, cocinin (methyl)acrylate, octadecyl (methyl)acrylate, dimethylaminoethyl (methyl)acrylate, diethylaminoethyl (methyl)acrylate, dimethylaminopropyl (methyl)acrylate, and glycidyl (methyl)acrylate; preferably, the acrylic monomer is selected from at least one of acrylic acid, methacrylic acid and 2-ethylacrylic acid; preferably, the molar ratio of the structural units derived from the acrylate monomer to the structural units derived from the acrylic monomer is 1: 0-2, preferably 1: 0.125-1.

**11.** The modified flexible polypropylene insulating material according to claim 10, wherein the alkenyl-containing polymerizable monomer is selected from at least one of vinyl acetate, styrene, α-methylstyrene, (meth)acrylate, vinyl alkyl ether, vinyl pyrrolidone, vinyl pyridine, vinyl imidazole and acrylonitrile; the (meth)acrylate is preferably selected from at least one of methyl (meth)acrylate, ethyl (meth)acrylate, and glycidyl (meth)acrylate; preferably, the alkenyl-containing polymerizable monomer is selected from vinyl acetate, styrene, α-methylstyrene; further preferably, the alkenyl-containing polymerizable monomer is styrene.

**12.** The modified flexible polypropylene insulating material according to any of claims 1-11, wherein the modified flexible

polypropylene insulating material comprises modified polypropylene (A) which is polypropylene graft-modified with a first unsaturated bond-containing polymerizable monomer, and low-modulus polypropylene (B) which is unmodified low-modulus polypropylene and/or low-modulus polypropylene graft-modified with a second unsaturated bond-containing polymerizable monomer;

preferably, the first unsaturated bond-containing polymerizable monomer and the second unsaturated bond-containing polymerizable monomer are each independently an alkenyl-containing functional monomer and optionally an anhydride monomer;
preferably, the content of the modified polypropylene (A) is 20-80 wt%, preferably 30-70 wt%, and more preferably 35-65 wt%, and the content of the low-modulus polypropylene (B) is 20-80 wt%, preferably 30-70 wt%, and more preferably 35-65 wt%, based on the total weight of the modified flexible polypropylene insulating material.

**13.** The modified flexible polypropylene insulating material according to claim 12, wherein the modified flexible polypropylene insulating material is prepared by blending the modified polypropylene (A) with the low-modulus polypropylene (B).

**14.** The modified flexible polypropylene insulating material according to claim 13, wherein the modified polypropylene (A) comprises structural units derived from homo- or co-polypropylene and structural units derived from the unsaturated bond-containing polymerizable monomer; the content of the structural units derived from the unsaturated bond-containing polymerizable monomer and in a grafted state in the modified polypropylene (A) is 0.1-20 wt%, preferably 1-15 wt%, based on the weight of the modified polypropylene (A).

**15.** The modified flexible polypropylene insulating material according to claim 14, wherein the homo- or co-polypropylene has at least one of the following characteristics: the comonomer content is 0-15 mol%, preferably 0-12 mol%, more preferably 0-8 mol%; the content of xylene solubles is less than 15 wt%, preferably 0.5-8 wt%; the melt flow rate under a load of 2.16 kg at 230°C is 1-10 g/10 min, preferably 2-5 g/10 min; the melting temperature Tm is 110-180°C, further preferably 120-170°C; the weight average molecular weight is $20\times10^4$-$50\times10^4$ g/mol; the flexural modulus is 500-2000 MPa, preferably 600-1700 MPa; the elongation at break is ≥ 200%, preferably ≥ 300%, the tensile strength is greater than 5 MPa, preferably 10-40 MPa.

**16.** The modified flexible polypropylene insulating material according to claim 14, wherein the comonomer of the co-polypropylene is selected from at least one of ethylene and $C_4$-$C_8$ $\alpha$-olefin; preferably, the comonomer of the co-polypropylene is selected from at least one of ethylene, 1-butene, 1-pentene, 4-methyl-1-pentene, 1-hexene, 1-heptene and 1-octene; further preferably, the comonomer of the co-polypropylene is ethylene and/or 1-butene; the comonomer content is 0.1-15 mol%, preferably 0.1-12 mol%, and more preferably 0.1-8 mol%, based on the total molar amount of the monomers.

**17.** The modified flexible polypropylene insulating material according to claim 12, wherein the low-modulus polypropylene is a copolymer of propylene with ethylene or a higher alpha-olefin, preferably an ethylene-propylene copolymer, having a flexural modulus of less than 300 MPa;

preferably, the copolymer of propylene with ethylene or a higher alpha-olefin comprises a propylene homopolymer and/or propylene random copolymer matrix component (1) and, dispersed therein, another propylene copolymer component (2);
more preferably, the low-modulus polypropylene is of sea-island structure or co-continuous structure;
further preferably, the low-modulus polypropylene prepared *in situ* in a reactor.

**18.** The modified flexible polypropylene insulating material according to claim 17, wherein the low-modulus polypropylene has at least one of the following characteristics: the comonomer content is 8-25 wt%, preferably 10-22 wt%; the content of xylene solubles is 18-75 wt%, preferably 30-70 wt%, and more preferably 30-67 wt%; the melt flow rate under a load of 2.16 kg at 230°C is 0.1-15 g/10min, preferably 0.2-7 g/10 min; the melting temperature Tm is 120-165°C, and further preferably 125-150°C; the flexural modulus is 10-300 MPa, preferably 15-250 MPa; the comonomer content in the xylene solubles is 10-50 wt%, preferably 20-35 wt%; the intrinsic viscosity ratio of the xylene solubles to the low-modulus polypropylene is 0.5-3, preferably 0.8-1.3; the weight average molecular weight is $25\times10^4$-$70\times10^4$ g/mol.

**19.** The modified flexible polypropylene insulating material according to claim 12, wherein the content of the structural units in a grafted state in the low-modulus polypropylene (B) is 0-5 wt%, preferably 0.2-2.5 wt%, based on the weight

of the low-modulus polypropylene (B).

**20.** A method for preparing the modified flexible polypropylene insulating material according to any of claims 1-19, comprising the following steps: blending modified polypropylene (A) and low-modulus polypropylene (B) to prepare the modified flexible polypropylene insulating material, wherein modified polypropylene (A) is polypropylene graft-modified with a first unsaturated bond-containing polymerizable monomer, and the low-modulus polypropylene (B) is unmodified low-modulus polypropylene and/or low-modulus polypropylene graft-modified with a second unsaturated bond-containing polymerizable monomer;

preferably, the first unsaturated bond-containing polymerizable monomer and the second unsaturated bond-containing polymerizable monomer are each independently an alkenyl-containing functional monomer and optionally an anhydride monomer;
preferably, the content of the modified polypropylene (A) is 20-80 wt%, preferably 30-70 wt%, and more preferably 35-65 wt%, and the content of the low-modulus polypropylene (B) is 20-80 wt%, preferably 30-70 wt%, and more preferably 35-65 wt%, based on the total weight of the modified flexible polypropylene insulating material.

**21.** The preparation method according to claim 20, wherein the preparation method comprises the following steps:

S1: subjecting a reaction mixture A comprising homo- or co-polypropylene and a first unsaturated bond-containing polymerizable monomer to grafting reaction in the presence of an inert gas, to obtain a modified polypropylene;
optionally, subjecting a reaction mixture B comprising a low-modulus polypropylene and a second unsaturated bond-containing polymerizable monomer to grafting reaction in the presence of an inert gas, to obtain a modified low-modulus polypropylene;
S2: mixing the modified polypropylene with an unmodified low-modulus polypropylene and/or the modified low-modulus polypropylene and optional additives, and extruding and granulating to obtain the modified flexible polypropylene insulating material.
preferably, the first unsaturated bond-containing polymerizable monomer and the second unsaturated bond-containing polymerizable monomer are each independently an alkenyl-containing functional monomer and optionally an anhydride monomer.

**22.** The preparation method according to claim 21, wherein the reaction mixture A and the reaction mixture B each independently comprise a free radical initiator; the free radical initiator is selected from a peroxide-based free radical initiator and/or an azo-based free radical initiator; the peroxide-based radical initiator is preferably selected from at least one of dibenzoyl peroxide, dicumyl peroxide, di-tert-butyl peroxide, lauroyl peroxide, dodecyl peroxide, tert-butyl peroxybenzoate, diisopropyl peroxydicarbonate, tert-butyl peroxy (2-ethylhexanoate) and dicyclohexyl peroxydicarbonate; the azo-based radical initiator is preferably azobisisobutyronitrile and/or azobisisoheptonitrile.

**23.** The preparation method according to claim 22, wherein the ratio of the mass of the radical initiator to the total mass of the unsaturated bond-containing polymerizable monomers is 0.01-10: 100, preferably 0.5-6: 100.

**24.** The preparation method according to claim 21, wherein the mass ratio of the first unsaturated bond-containing polymerizable monomer to the homo- or co-polypropylene is 0.5-35: 100, preferably 2-30: 100, and more preferably 2.5-25: 100;

the mass ratio of the second unsaturated bond-containing polymerizable monomer to the low-modulus polypropylene is 0.1-20:100, preferably 0.2-15:100, and more preferably 0.5-10: 100;
when the unsaturated bond-containing polymerizable monomer includes an alkenyl-containing functional monomer and an anhydride monomer, the mass ratio of the alkenyl-containing functional monomer to the anhydride monomer may be 0.5-10: 1, preferably 2-8: 1.

**25.** The preparation method according to claim 21, wherein the temperature of the grafting reaction is 30-130°C, and preferably 60-120°C; the time is 0.5-10 h, and preferably 1-6 h.

**26.** The preparation method according to claim 21, wherein the reaction mixture A and the reaction mixture B also each independently comprise at least one of the following components: a dispersant, an interfacial agent and an organic solvent, wherein the mass content of the dispersant is 50-300% of the mass of the homo- or co-polypropylene/the low-modulus polypropylene, the mass content of the interfacial agent is 1-30% of the mass of the homo- or co-polypropylene/the low-modulus polypropylene, and the mass content of the organic solvent is 1-35% of the mass of the homo- or co-polypropylene/the low-modulus polypropylene.

**27.** The preparation method according to claim 26, wherein the preparation method comprises the following steps:

a. placing a homo- or co-polypropylene in a closed reactor, followed by inert gas replacement;
b. adding a free radical initiator and a first unsaturated bond-containing polymerizable monomer to the closed reactor, and mixing with stirring;
c. optionally adding an interfacial agent and optionally swelling the reaction system;
d. optionally adding a dispersant, and heating the reaction system to the grafting reaction temperature, to carry out the grafting reaction;
e. after the end of the reaction, optionally filtering, drying to obtain a modified polypropylene;
f. mixing the modified polypropylene with ungrafted and/or grafted low-modulus polypropylene and optional aids, melt extruding and granulating, to obtain the modified flexible polypropylene insulating material;

wherein, the preparation method of the grafted low-modulus polypropylene comprises the following steps:

i. placing a low-modulus polypropylene in a closed reactor, followed by inert gas replacement;
ii. adding a free radical initiator and a second unsaturated bond-containing polymerizable monomer to the closed reactor, and mixing with stirring;
iii. optionally adding an interfacial agent and optionally swelling the reaction system;
iv. optionally adding a dispersant, and heating the reaction system to the grafting reaction temperature, to carry out the grafting reaction;
v. after the end of the reaction, optionally filtering, drying to obtain a modified low-modulus polypropylene.

**28.** The preparation method according to claim 26, wherein the preparation method comprises the following steps:

a. placing a homo- or co-polypropylene in a closed reactor, followed by inert gas replacement;
b. mixing an organic solvent and a free radical initiator, and adding the mixture to the closed reactor;
c. removing the organic solvent;
d. adding a first unsaturated bond-containing polymerizable monomer, optionally adding an interfacial agent, and optionally swelling the reaction system;
e. optionally adding a dispersant, and heating the reaction system to the grafting reaction temperature, to carry out the grafting reaction;
f. after the end of the reaction, optionally filtering, drying to obtain a modified polypropylene;
g. weighing the modified polypropylene and ungrafted and/or grafted low-modulus polypropylene and optional aids in proportions, mixing, melt extruding and granulating, to obtain the modified flexible polypropylene insulating material;

wherein, the preparation method of the grafted low-modulus polypropylene comprises the following steps:

i. placing a low-modulus polypropylene in a closed reactor, followed by inert gas replacement;
ii. mixing an organic solvent and a free radical initiator, and adding the mixture to the closed reactor;
iii. removing the organic solvent;
iv. adding a second unsaturated bond-containing polymerizable monomer, optionally adding an interfacial agent, and optionally swelling the reaction system;
v. optionally adding a dispersant, and heating the reaction system to the grafting reaction temperature, to carry out the grafting reaction;
vi. after the end of the reaction, optionally filtering, drying to obtain a modified low-modulus polypropylene.

**29.** Use of the modified flexible polypropylene insulating material according to any of claims 1-19, preferably in the field of cables.

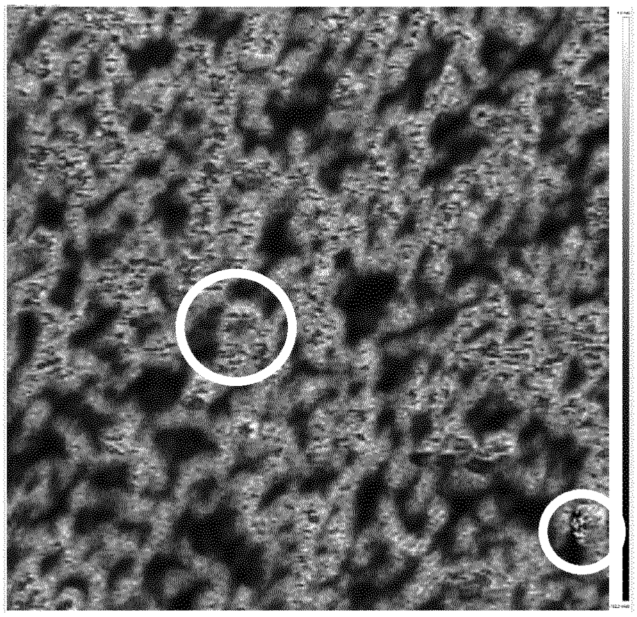

FIG. 1

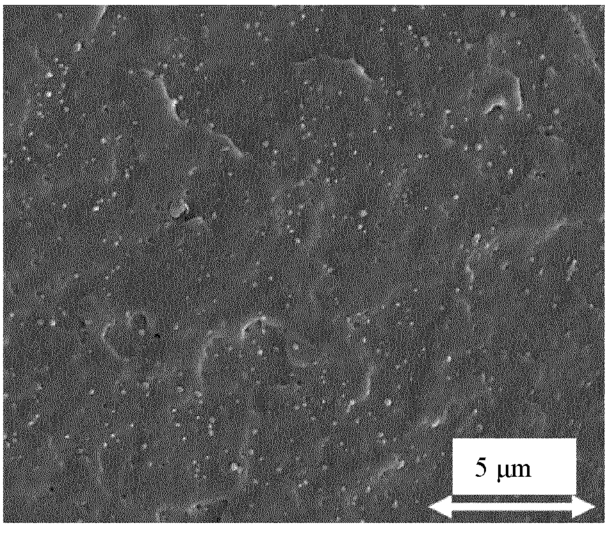


FIG. 2

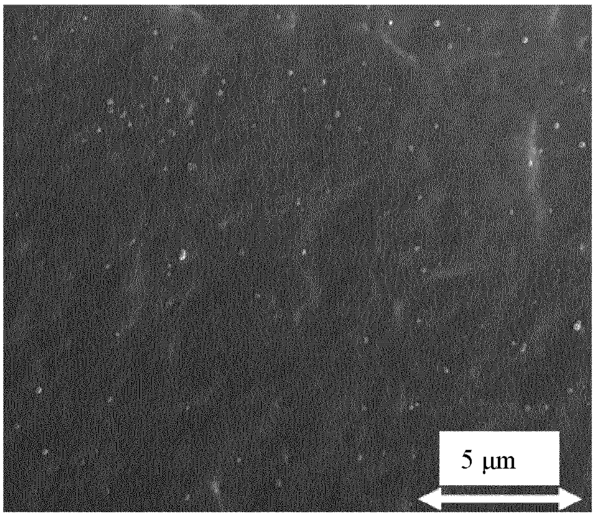


FIG. 3

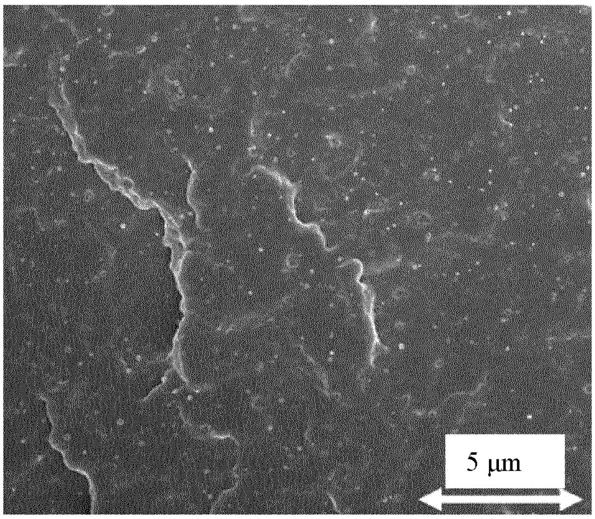


FIG. 4

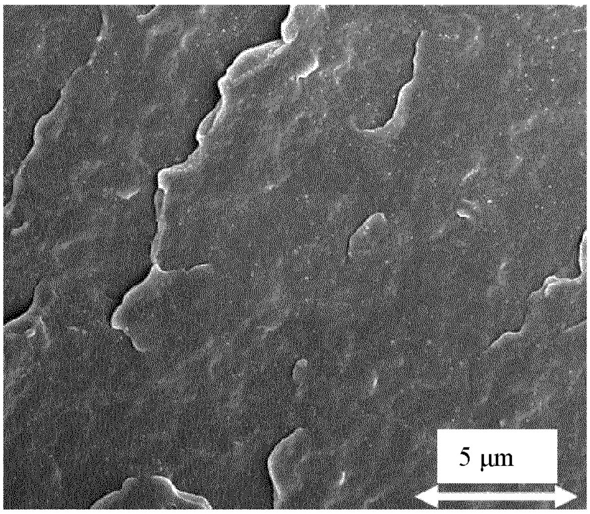


FIG. 5

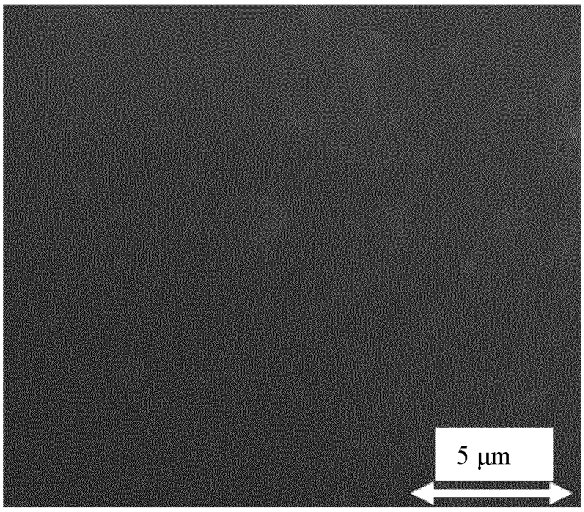


FIG. 6

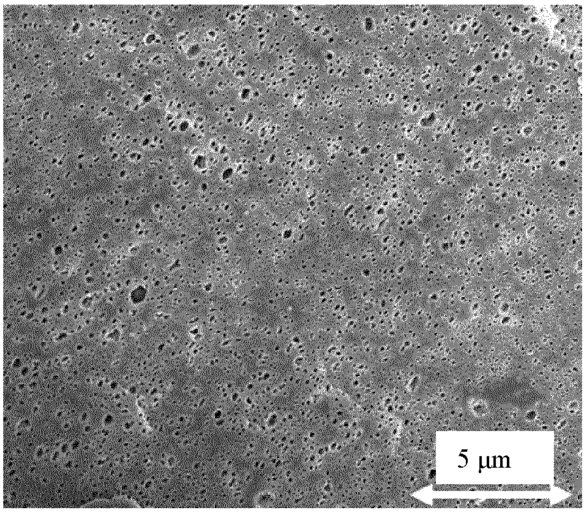


FIG. 7

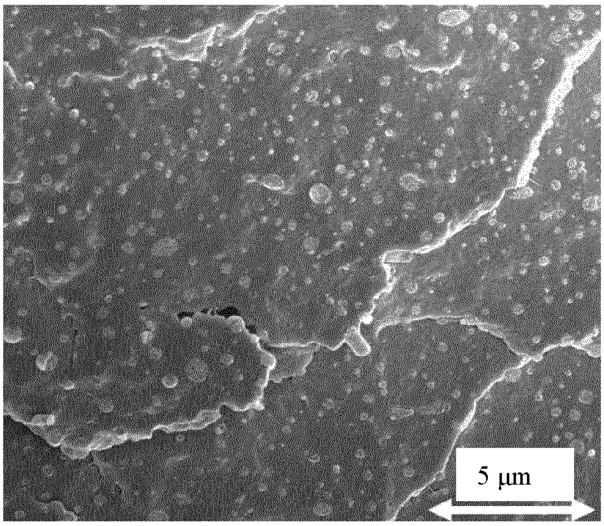


FIG. 8

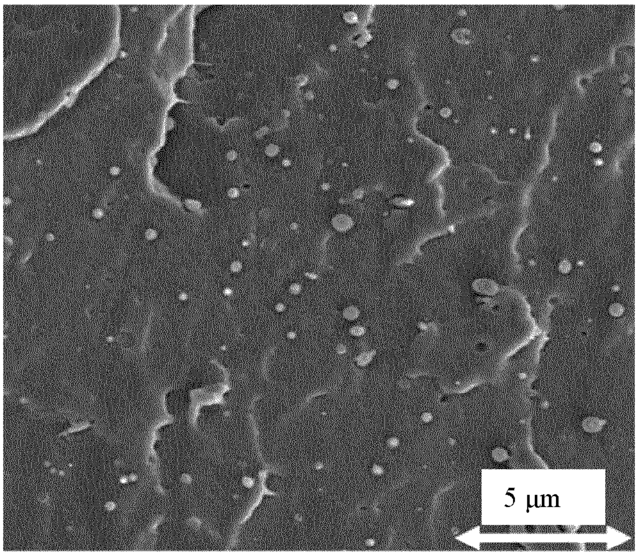


FIG. 9

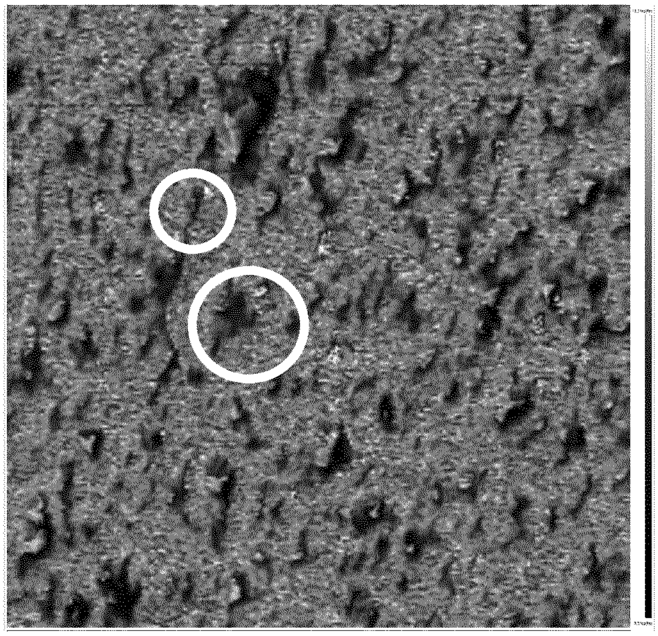

FIG. 10

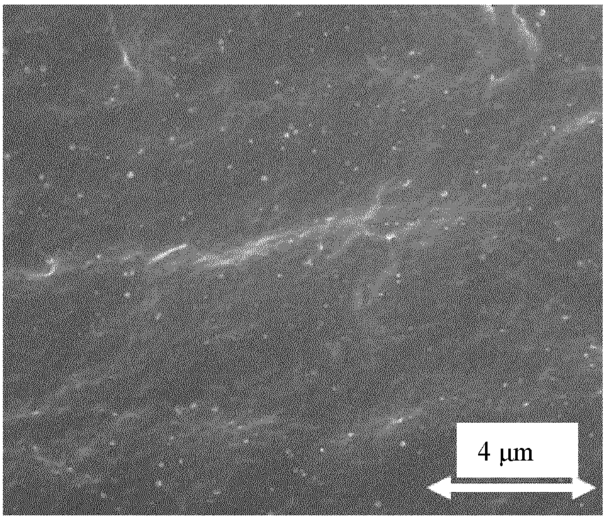


FIG. 11

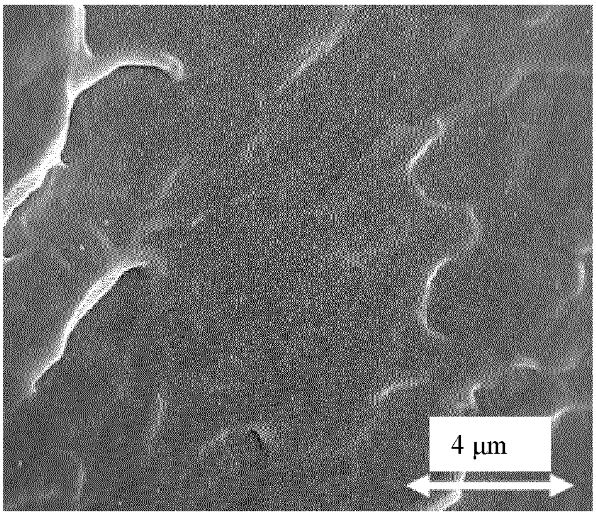


FIG. 12

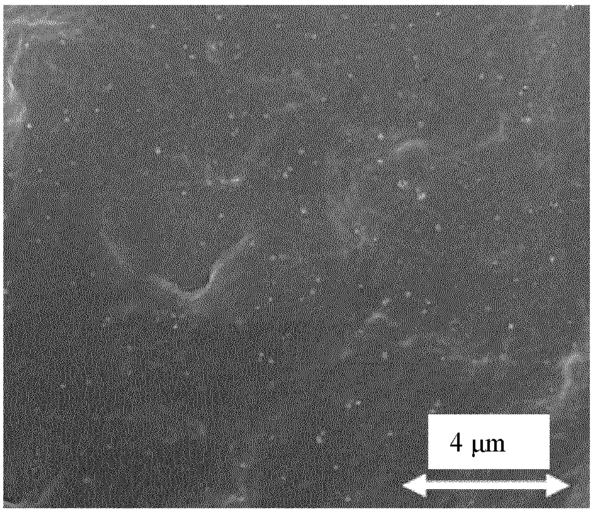


FIG. 13

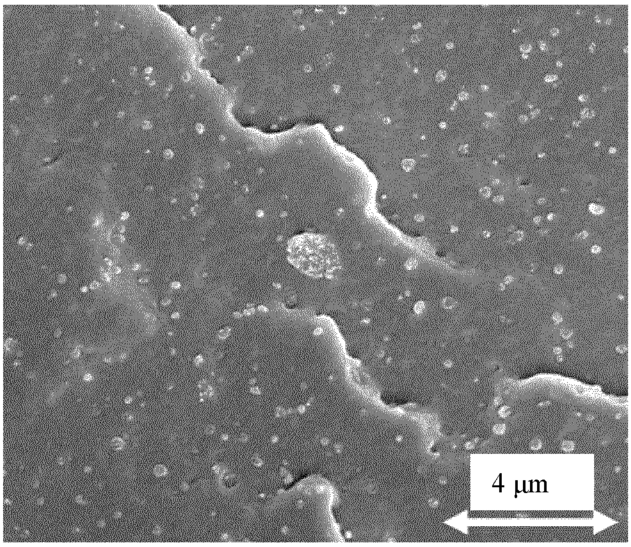


FIG. 14

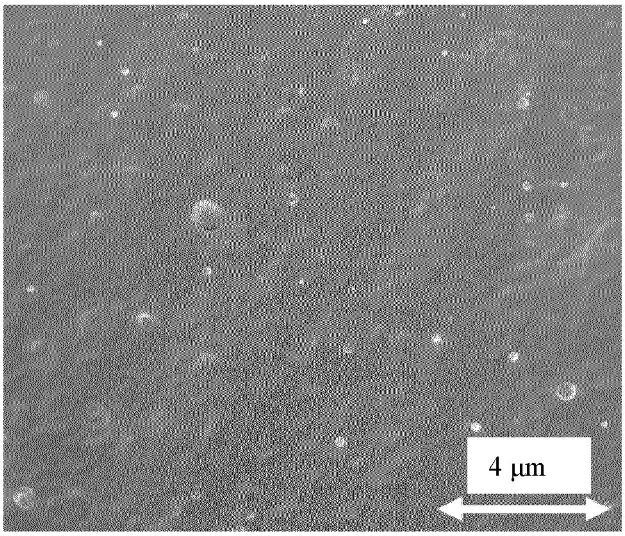


FIG. 15

## INTERNATIONAL SEARCH REPORT

International application No.
**PCT/CN2022/109917**

**A. CLASSIFICATION OF SUBJECT MATTER**

C08L 23/12(2006.01)i; C08F 255/02(2006.01)i; C08F 255/04(2006.01)i; C08F 222/06(2006.01)i; H01B 3/30(2006.01)i

According to International Patent Classification (IPC) or to both national classification and IPC

**B. FIELDS SEARCHED**

Minimum documentation searched (classification system followed by classification symbols)

C08L23/-, C08F255/-, C08F222/-, H01B3/-

Documentation searched other than minimum documentation to the extent that such documents are included in the fields searched

Electronic data base consulted during the international search (name of data base and, where practicable, search terms used)

CNPAT, CNKI, WPI, EPODOC, ISI: 中国石油化工股份有限公司, 中国石油化工股份有限公司北京化工研究院, 清华大学, 邵清, 何金良, 袁浩, 李琦, 张雅茹, 胡军, 王铭锑, 黄上师, 李娟, 胡世勋, 张琦, 高达利, 施红伟, pp or 聚丙烯, 接枝, 电线 or 电缆 or 线缆 or 缆线 or 绝缘 or 护套, 接枝量, 二甲苯, 弯曲模量or 挠曲模量, 酸酐 or 苯乙烯 or 丙烯酸 or (乙烯基 5d 硅烷), 柔性 or 柔软, 橡胶相, 连续相, 接枝相, 接枝态, polypropylene, graft+, cable?, wire?, insulat+, styrene, vinyl, acrylate, xylene, flexural modulus, graft+ 3d (amount or phase or state)

**C. DOCUMENTS CONSIDERED TO BE RELEVANT**

| Category* | Citation of document, with indication, where appropriate, of the relevant passages | Relevant to claim No. |
|---|---|---|
| X | CN 112708204 A (CHINA PETROLEUM & CHEMICAL CORP. et al.) 27 April 2021 (2021-04-27) description, embodiments 1-5 | 1-29 |
| Y | CN 112708204 A (CHINA PETROLEUM & CHEMICAL CORP. et al.) 27 April 2021 (2021-04-27) description, embodiments 1-5 | 7-11 |
| X | CN 112708205 A (CHINA PETROLEUM & CHEMICAL CORP. et al.) 27 April 2021 (2021-04-27) description, embodiments 1-6 | 1-29 |
| X | CN 1119657 A (SYSMEX CORP.) 03 April 1996 (1996-04-03) description, page 3, 2nd-to-last paragraph-page 12, paragraph 8 | 1-29 |
| Y | CN 106317334 A (INSTITUTE OF CHEMISTRY, CHINESE ACADEMY OF SCIENCES) 11 January 2017 (2017-01-11) description, paragraphs [0006]-[0007] and [0015]-[0016] | 7-11 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **14 October 2022** | **26 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/109917**

**C. DOCUMENTS CONSIDERED TO BE RELEVANT**

| Category* | Citation of document, with indication, where appropriate, of the relevant passages | Relevant to claim No. |
|---|---|---|
| A | EP 1582562 A1 (REHAU AG. & CO.) 05 October 2005 (2005-10-05)<br>entire document | 1-29 |
| A | WO 2007056154 A2 (DOW GLOBAL TECHNOLOGIES INC. et al.) 18 May 2007 (2007-05-18)<br>entire document | 1-29 |

Form PCT/ISA/210 (second sheet) (January 2015)

**INTERNATIONAL SEARCH REPORT**
**Information on patent family members**

International application No.
**PCT/CN2022/109917**

| Patent document cited in search report | | | Publication date (day/month/year) | Patent family member(s) | | | Publication date (day/month/year) |
|---|---|---|---|---|---|---|---|
| CN | 112708204 | A | 27 April 2021 | None | | | |
| CN | 112708205 | A | 27 April 2021 | None | | | |
| CN | 1119657 | A | 03 April 1996 | TW | 383327 | B | 01 March 2000 |
| | | | | EP | 0697438 | A1 | 21 February 1996 |
| | | | | CA | 2145376 | A1 | 30 January 1996 |
| | | | | JP | H0859952 | A | 05 March 1996 |
| | | | | AT | 166912 | T | 15 June 1998 |
| | | | | US | 5455300 | A | 03 October 1995 |
| | | | | DE | 69502778 | D1 | 09 July 1998 |
| | | | | AU | 2725495 | A | 08 February 1996 |
| | | | | KR | 960004431 | A | 23 February 1996 |
| CN | 106317334 | A | 11 January 2017 | None | | | |
| EP | 1582562 | A1 | 05 October 2005 | DE | 502005010946 | D1 | 24 March 2011 |
| | | | | DE | 102004016125 | B3 | 13 October 2005 |
| | | | | AT | 497994 | T | 15 February 2011 |
| WO | 2007056154 | A2 | 18 May 2007 | JP | 2009515011 | A | 09 April 2009 |
| | | | | CA | 2628109 | A1 | 18 May 2007 |
| | | | | CN | 101326208 | A | 17 December 2008 |
| | | | | TW | 200730546 | A | 16 August 2007 |
| | | | | AU | 2006311913 | A1 | 18 May 2007 |
| | | | | MX | 2008005738 | A | 25 November 2008 |
| | | | | IN | 2183CHENP2008 | A | 06 March 2009 |
| | | | | KR | 20080074940 | A | 13 August 2008 |
| | | | | US | 2007149710 | A1 | 28 June 2007 |
| | | | | BR | PI0619677 | A2 | 11 October 2011 |
| | | | | EP | 1945687 | A2 | 23 July 2008 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 893802 A1
- EP 893801 A1
- KR 1020180093807 A
- KR 1020120095309 A
- CN 105949394 A
- US 20140363671 A1
- CN 111354507 A
- CN 102453180 B
- CN 101490096 B
- CN 102816269 B
- CN 102816270 B
- CN 1069908 C
- CN 1049932 C
- CN 1108315 C
- CN 1117610 C
- CN 1132865 C
- CN 102020733 B
- CN 106543369 A
- CN 104499281 A
- CN 102108112 A
- CN 109251270 A
- CN 1884326 A
- CN 101492517 B
- CN 110305400 A
- CN 102453180 A
- CN 102816269 A
- CN 101679557 A
- CN 109153831 A


### Non-patent literature cited in the description


- **ZHANG GUANGPING.** *Solid Phase Graft of Maleic Anhydride onto Polypropylene in Helical Ribbon Reactor, China Plastics,* February 2002, vol. 16 (2), 69-71
- **WANG ZHENGXI ; SUN DAOTONG ; CAO LIQUN.** Application of the Standard Addition Method to Quantitative Infrared Analysis of Polymer [J. *Plastic Industry,* 1989, vol. 6, 41-43